# FASCICULE DE BREVET EUROPEEN

(11) **EP 3 782 331 B1**
(45) Date de publication et mention de la délivrance du brevet: **27.07.2022**
(21) Numéro de dépôt: 19721642.7
(22) Date de dépôt: 09.05.2019
(51) Int. Cl.: H04L 12/28

(54) **ÉQUIPEMENT ADAPTÉ POUR ÊTRE CONNECTÉ À UN SYSTÈME DE TYPE AMM**
VORRICHTUNG ZUR VERBINDUNG MIT EINEM AMM-SYSTEM
EQUIPMENT DESIGNED TO BE CONNECTED TO AN AMM-TYPE SYSTEM

(30) Priorité: 17.05.2018 FR 1854114
(43) Date de publication de la demande: 24.02.2021
(73) Titulaire: Sagemcom Energy & Telecom SAS, 92500 Rueil-Malmaison (FR)
(72) Inventeur: TEBOULLE, Henri, 92500 Rueil Malmaison (FR); LECAPPON, Jean-Paul, 92500 Rueil Malmaison (FR); VERNET, Thierry, 92500 Rueil Malmaison (FR)
(74) Mandataire: Cabinet Le Guen Maillet
(86) Numéro de dépôt international: PCT/EP2019/061914
(87) Numéro de publication internationale: WO 2019/219496

(56) Documents cités:
- EP-A1- 3 122 061
- EP-A2- 3 037 835
- US-A1- 2017 171 090
- Klaas De Craemer ET AL: "Analysis of State-of-the-art Smart Metering Communication Standards", Proceedings of the 5th Young Researchers Symposium (YRS), Leuven, 29-30 March 2010, 1 mars 2010 (2010-03-01), pages 1-6, XP055302249, Extrait de l'Internet: URL:https://lirias.kuleuven.be/bitstream/1 23456789/265822/1/SmartMeteringCommStandar ds.pdf [extrait le 2016-09-13]

## Description

La présente invention concerne un équipement adapté pour être connecté à un système de gestion automatique de relevés de compteurs électriques, un système de communication comprenant ledit équipement et des procédés exécutés au moins en partie par ledit équipement.

Les réseaux de transport d'électricité, tels que le réseau public de transport d'électricité français, ont vocation à acheminer des quantités importantes d'électricité sur de grandes distances. Ces réseaux sont généralement appelés *réseaux hautes tensions* (réseaux HT) puisqu'ils transportent des courants ayant une tension supérieure à « 50 » kV. Ces réseaux HT sont équipés de capteurs et d'actionneurs permettant de gérer ces réseaux. Les capteurs sont par exemple des capteurs de température, de pression ou de mouvement, et les actionneurs par exemple des commutateurs (« switches » en terminologie anglo-saxonne). Une telle gestion, dite intelligente, permet notamment d'adapter à tout moment une production et une consommation d'électricité sur les réseaux HT, ce qui permet notamment de réaliser des économies d'énergie et de contourner des défaillances du réseau.

Les réseaux de distribution d'électricité quant à eux sont destinés à acheminer l'électricité sur de plus courtes distances pour une alimentation de la consommation locale, mais aussi pour un raccordement de nombreux producteurs d'électricité de petite et moyenne puissance. Ces réseaux sont généralement appelés *réseaux moyennes ou basses tensions* (réseaux MT ou BT) puisqu'ils transportent des courants ayant respectivement une tension comprise entre « 1 » kV et « 50 » kV et inférieure à « 1 » kV. Un besoin de gestion intelligente de ce type de réseaux se fait aussi ressentir d'une part pour mieux gérer les défaillances des réseaux MT et BT et réaliser des économies d'énergie, mais aussi d'autre part pour mieux intégrer la production d'électricité par énergie renouvelable. Actuellement aucune solution n'existe pour permettre une gestion intelligente des réseaux MT et BT à l'image de ce qui se fait dans les réseaux HT.

Il existe pourtant des moyens de communication, notamment dans les réseaux BT, permettant de remonter vers une unité centralisée des informations émanant de terminaux du réseau BT. Les réseaux de communication par courants porteurs en ligne (« PowerLine Communications » en terminologie anglo-saxonne) pour des systèmes de type AMM (gestion automatique de relevés de compteurs, « Automated Meter Management » en terminologie anglo-saxonne) utilisent ainsi des infrastructures de réseaux BT (réseau physique) pour créer un réseau, dit réseau logique. Parmi ces réseaux logiques, dits réseaux CPL (Courants Porteurs en Ligne), on peut citer les réseaux conformes aux spécifications PRIME (« PoweRline Intelligent Metering Evolution » en terminologie anglo-saxonne) ou les réseaux conformes au standard G3-PLC spécifié dans la recommandation ITU-T G.9903. Dans les réseaux CPL, des communications sont établies entre des compteurs électriques, dits intelligents (« smart electrical meters » en terminologie anglo-saxonne), et un dispositif appelé *concentrateur de données* (« data concentrator » en terminologie anglo-saxonne) pour permettre notamment une relève automatisée à distance de mesures de consommation électrique effectuées par lesdits compteurs électriques intelligents. Par la suite nous appelons simplement *compteur* chaque compteur électrique intelligent. Une pluralité de concentrateurs de données est typiquement géographiquement déployée dans un réseau CPL de manière à répartir la charge de gestion à distance d'une multitude de compteurs. Chaque concentrateur de données est lui-même connecté à une même unité centralisée permettant la gestion du système de type AMM qui est gérée par un opérateur du réseau d'alimentation électrique auquel lesdits compteurs sont connectés.

Comme l'indique l'acronyme AMM, les réseaux CPL pour les systèmes de type AMM sont destinés à gérer des données de métrologie émanant de compteurs. Les réseaux CPL ne permettent donc pas de remonter des informations provenant de capteurs, ni de contrôler des actionneurs.

Avec l'apparition récente de l'internet des objets (« Internet of Things (IoT) » en terminologie anglo-saxonne) est apparu un nouveau type de réseaux : les réseaux sans fils à grande portée et à faible consommation d'énergie (« Low Power Wide Area Network (LPWAN) », en terminologie anglo-saxonne). Parmi ces réseaux LPWAN, on peut citer des réseaux basés sur la technologie LoRa (marque déposée) (« Long Range» en terminologie anglo-saxonne).

Un réseau basé sur la technologie LoRa (appelé « réseau LoRa » par la suite) utilise un protocole appelé LoRaWAN. Un réseau LoRa est composé de stations de base ou passerelles (« gateways » en terminologie anglo-saxonne) généralement placées sur des points hauts afin de couvrir une grande zone géographique. Les passerelles sont aptes à détecter des messages émis dans leur zone par des équipements ou terminaux (« endpoints » en terminologie anglo-saxonne) et à les remonter vers au moins un serveur (« LoRa Network Server (LNS) » en terminologie anglo-saxonne) qui les traitera.

Dans un fonctionnement classique d'un réseau LoRa, un terminal désirant transmettre un message *(i.e.* des données) au serveur, transmet ce message dans une trame, dite trame montante, conforme au protocole LoRaWAN. La trame montante est transmise en mode multidiffusion (« broadcast » en terminologie anglo-saxonne). Cette trame montante est reçue par au moins une passerelle. Chaque passerelle ayant reçu la trame la décode et retransmet le message au serveur dans une requête HTTP (protocole de transfert hypertext, « HyperText Transfer Protocol » en terminologie anglo-saxonne). Si plusieurs passerelles ont reçu la trame, le serveur reçoit plusieurs requêtes HTTP contenant le message. Le serveur doit alors désigner parmi les passerelles ayant reçu la trame montante, la passerelle à utiliser pour relayer une réponse au message contenu dans la trame montante. La réponse est transmise du serveur à la passerelle désignée dans une requête HTTP, puis en point à point, de la passerelle désignée au terminal dans une trame descendante conforme au protocole LoRaWAN.

Il semble donc que les réseaux LoRa seraient une solution intéressante pour permettre à des capteurs ou des actionneurs utilisés pour gérer un réseau BT de communiquer avec une unité centralisée. Toutefois, il est connu que les réseaux BT couvrent très finement des territoires, ce qui n'est pas le cas des réseaux LPWAN tels que les réseaux LoRa. Certaines zones couvertes par les réseaux BT ne sont pas couvertes par un réseau LPWAN. Or, la remontée d'informations de capteurs et le contrôle d'actionneurs doivent aussi être possibles dans ces zones non couvertes. Par ailleurs, les réseaux LoRa sont des réseaux publics, partagés par beaucoup d'utilisateurs. Transmettre des données sensibles telles que des données permettant une gestion d'un réseau BT sur un réseau LoRa peut paraître risqué.

La demande de brevet EP 3 122 061 A1 traite de la transmission de données depuis des compteurs électriques intelligents vers une entité de gestion.

La demande de brevet US 2017/0171090A1 traite d'un système et d'un procédé pour la gestion d'attributs dans un système de type internet des objets.

Il est souhaitable de pallier ces inconvénients de l'état de la technique. Il est notamment souhaitable de proposer une solution qui permette à une unité centralisée de recevoir des informations de capteurs et/ou de contrôler des actionneurs situés dans n'importe quelles zones d'un réseau BT.

Il est de plus souhaitable de fournir une solution qui soit simple à mettre en œuvre et à faible coût.

Selon un premier aspect de la présente invention, la présente invention concerne un équipement adapté pour être connecté à un système de gestion automatique de relevés de compteurs électriques, dit système AMM, le système AMM comprenant au moins un concentrateur de données auquel sont rattachés des compteurs électriques intelligents, dit compteurs, via un premier réseau par courants porteurs en ligne, chaque concentrateur de données étant connecté à un système de gestion comprenant une entité de gestion via un deuxième réseau et servant de relais entre lesdits compteurs et le système de gestion. L'équipement est connecté à un concentrateur de données, dit concentrateur relai via un troisième réseau, ledit équipement comprend au moins une interface de communication avec un quatrième réseau, ledit quatrième réseau permettant à au moins un dispositif connecté audit quatrième réseau de communiquer avec l'équipement. Ledit équipement étant apte à recevoir des données d'un ou plusieurs dispositifs connectés au quatrième réseau, à vérifier que les données reçues sont conformes à un critère prédéterminé dépendant d'un type des données transmises et à transmettre une alarme à un serveur d'administration compris dans le système de gestion en cas de non-conformité desdites données ; et, apte à relayer une commande émise par le serveur d'administration et destinée à un dispositif connecté au quatrième réseau.

De cette manière, l'équipement permet de bénéficier du système de type AMM pour remonter des données au serveur d'administration.

Selon un mode de réalisation, l'équipement comprend une première interface de communication avec un premier quatrième réseau de type à grande portée et à faible consommation d'énergie, dit réseau de type LPWAN, et/ou une seconde interface de communication avec un deuxième quatrième réseau de type filaire.

Selon un deuxième aspect de l'invention, l'invention concerne un système de communication basé sur un système de gestion automatique de relevés de compteurs électriques, dit système AMM, comprenant au moins un équipement selon le premier aspect.

Selon un mode de réalisation, chaque dispositif connecté au premier ou au deuxième quatrième réseau est un capteur ou un actionneur.

Selon un mode de réalisation, le deuxième quatrième réseau est un réseau de type RS485 et chaque donnée ou commande transmise sur le deuxième quatrième réseau est transmise dans une trame conforme au protocole Modbus.

Selon un mode de réalisation, chaque donnée ou commande transmise sur le réseau de type LPWAN est transmise dans une trame conforme à un protocole propriétaire utilisant une couche physique identique à une couche physique utilisée par le protocole LoRaWAN et un format de charges utiles de niveau applicatif propriétaire.

En utilisant un protocole propriétaire, on évite des problèmes de sécurité inhérents à des réseaux partagés tels que les réseaux LoRa.

Selon un mode de réalisation, le format de charge utile propriétaire comprend un premier champ permettant de définir un type de dispositif impliqué soit en tant que destinataire soit en tant qu'émetteur de la trame, un deuxième champ permettant de transporter une valeur représentative d'une commande lorsque la trame est destinée à un dispositif de type actionneur, une valeur représentative d'un type de données lorsque la trame est échangée avec un dispositif de type capteur ou une valeur représentative d'un accusé de réception, un troisième champ indiquant combien d'octets de données sont présents dans la charge utile de la trame et optionnellement, en fonction d'une valeur du troisième champ, un ou plusieurs quatrièmes champs de données.

Selon un mode de réalisation, le système est adapté pour exécuter une procédure de connexion lorsqu'un dispositif doit être connecté audit réseau de type LPWAN. La procédure de connexion comprend : émettre, par ledit dispositif, une requête de connexion conforme au protocole propriétaire en mode multidiffusion ; relayer, par chaque équipement dudit système ayant reçu ladite requête, ladite requête vers le concentrateur relai auquel est rattaché l'équipement ; relayer, par chaque concentrateur relai auquel est rattaché un équipement ayant relayé la requête, ladite requête vers l'entité de gestion ; choisir, par l'entité de gestion, parmi les équipements ayant relayé ladite requête, un équipement à associer avec ledit dispositif ; transmettre audit dispositif, par l'entité de gestion, via le concentrateur relai auquel est rattaché l'équipement choisi et l'équipement choisi, une requête d'autorisation de connexion.

Selon un mode de réalisation, le système est adapté pour exécuter une procédure de connexion lorsqu'un dispositif doit être connecté à un équipement par ledit deuxième quatrième réseau, la procédure de connexion comprenant : créer par ledit équipement, un dispositif virtuel représentant le dispositif devant être connecté au deuxième quatrième réseau ; créer, par ledit dispositif virtuel, une requête de connexion conforme au protocole propriétaire; transmettre, par l'équipement, à l'entité de gestion, via le concentrateur relai rattaché à l'équipement, la requête de connexion ; transmettre audit dispositif virtuel, par l'entité de gestion, via le concentrateur relai auquel est rattachée l'équipement et l'équipement, une requête d'autorisation de connexion.

Selon un mode de réalisation, le système est adapté pour exécuter une procédure de transmission d'une commande à un dispositif de type actionneur, la procédure de transmission d'une commande comprenant transmettre une commande audit dispositif, par le serveur d'administration, via l'entité de gestion, le concentrateur relai auquel est rattaché l'équipement associé audit dispositif de type actionneur et l'équipement associé audit dispositif de type actionneur.

Selon un mode de réalisation, la procédure de transmission d'une commande comprend en outre, transmettre, par ledit dispositif de type actionneur un accusé de réception pour la commande au serveur d'administration, via l'équipement associé audit dispositif de type actionneur, le concentrateur relai auquel est rattaché l'équipement associé audit dispositif de type actionneur et l'entité de gestion.

Selon un mode de réalisation, le système est adapté pour exécuter une procédure de transmission de données, la procédure de transmission de données comprenant pour chaque dispositif de type capteur transmettant des données, transmettre, par ledit dispositif de type capteur des données dans une trame conforme au protocole propriétaire à l'équipement associé audit capteur, la transmission de l'alarme au serveur d'administration en cas de non-conformité de données reçues par un équipement se faisant via le concentrateur relai auquel est rattaché l'équipement ayant constaté ladite non-conformité.

Selon un mode de réalisation, la transmission par ledit dispositif de type capteur des données dans une trame conforme au protocole propriétaire à l'équipement associé audit dispositif de type capteur fait suite à une réception par ledit dispositif de type capteur d'une requête conforme au protocole propriétaire émise par ledit équipement demandant une transmission desdites données.

Selon un troisième aspect de l'invention, l'invention concerne un procédé de remontée d'alarme exécuté par un équipement connecté à un système de communication basé sur un système de gestion automatique de relevés de compteurs électriques, dit système AMM, le système AMM comprenant au moins un concentrateur de données auquel sont rattachés des compteurs électriques intelligents, dit compteurs, via un premier réseau par courants porteurs en ligne, chaque concentrateur de données étant connecté à un système de gestion comprenant une entité de gestion via un deuxième réseau et servant de relais entre lesdits compteurs et le système de gestion. L'équipement est connecté à un concentrateur de données, dit concentrateur relai via un troisième réseau et comprend au moins une première interface de communication avec un premier quatrième réseau de type à grande portée et à faible consommation d'énergie, dit réseau de type LPWAN, ledit réseau de type LPWAN permettant à au moins un dispositif connecté audit réseau de type LPWAN de communiquer avec l'équipement en utilisant un protocole propriétaire utilisant une couche physique identique à une couche physique utilisée par le protocole LoRaWAN et des trames comprenant une charge utile de niveau applicatif ayant un format propriétaire,
et/ou au moins une deuxième interface de communication avec un deuxième quatrième réseau de type filaire dans lequel chaque données ou commande transmise est transmise dans une trame conforme au protocole Modbus. Le procédé comprend recevoir d'un ou plusieurs dispositifs de type capteur des données dans une trame conforme au protocole propriétaire ; vérifier que les données reçues sont conformes à un critère prédéterminé dépendant d'un type des données transmises ; et, transmettre une alarme à un serveur d'administration compris dans le système de gestion en cas de non-conformité desdites données, la transmission se faisant via le concentrateur relai et l'entité de gestion.

Selon un quatrième aspect de l'invention, l'invention concerne un procédé de communication entre un dispositif et un serveur d'administration compris dans un système de communication basé sur un système de gestion automatique de relevés de compteurs électriques, dit système AMM, le système AMM comprenant au moins un concentrateur de données auquel sont rattachés des compteurs électriques intelligents, dits compteurs, via un premier réseau par courants porteurs en ligne, chaque concentrateur de données étant connecté à un système de gestion comprenant le serveur d'administration et une entité de gestion via un deuxième réseau et servant de relais entre lesdits compteurs et le système de gestion. Le système de communication comprend au moins un équipement connecté à un concentrateur de données, dit concentrateur relai via un troisième réseau, l'équipement comprenant au moins une interface de communication avec un quatrième réseau de type à grande portée et à faible consommation d'énergie, dit réseau de type LPWAN, ledit réseau de type LPWAN permettant à au moins un dispositif connecté audit réseau de type LPWAN de communiquer avec l'équipement en utilisant un protocole propriétaire utilisant une couche physique identique à une couche physique utilisée par le protocole LoRaWAN et des trames comprenant une charge utile de niveau applicatif ayant un format propriétaire. Le procédé comprend une procédure de connexion dudit dispositif audit quatrième réseau comprenant: émettre, par ledit dispositif, une requête de connexion conforme au protocole propriétaire en mode multidiffusion ; relayer, par chaque équipement dudit système ayant reçu la requête, ladite requête vers le concentrateur relai auquel est rattaché l'équipement ; relayer, par chaque concentrateur relai auquel est rattaché un équipement ayant relayé la requête, ladite requête vers l'entité de gestion ; choisir, par l'entité de gestion, parmi les équipements ayant relayé ladite requête, un équipement à associer avec ledit dispositif ; transmettre audit dispositif, par l'entité de gestion, via le concentrateur relai auquel est rattaché l'équipement choisi et l'équipement choisi, une requête d'autorisation de connexion.

Selon un cinquième aspect de l'invention, l'invention concerne un procédé de communication entre un dispositif et un serveur d'administration compris dans un système de communication basé sur un système de gestion automatique de relevés de compteurs électriques, dit système AMM, le système AMM comprenant au moins un concentrateur de données auquel sont rattachés des compteurs électriques intelligents, dit compteurs, via un premier réseau par courants porteurs en ligne, chaque concentrateur de données étant connecté à un système de gestion comprenant le serveur d'administration et une entité de gestion via un deuxième réseau et servant de relais entre lesdits compteurs et le système de gestion. Le système de communication comprend au moins un équipement connecté à un concentrateur de données, dit concentrateur relai via un troisième réseau, l'équipement comprenant au moins une interface de communication avec un quatrième réseau de type filaire dans lequel chaque données ou commande transmise est transmise dans une trame conforme au protocole Modbus, et ce que le procédé comprend une procédure de connexion dudit dispositif audit quatrième réseau comprenant : créer par ledit équipement, un dispositif virtuel représentant le dispositif devant être connecté au quatrième réseau ; créer, par ledit dispositif virtuel, une requête de connexion conforme au protocole propriétaire; transmettre, par l'équipement, à l'entité de gestion, via le concentrateur relai rattaché à l'équipement, la requête de connexion ; transmettre audit dispositif virtuel, par l'entité de gestion, via le concentrateur relai auquel est rattachée l'équipement et l'équipement, une requête d'autorisation de connexion.

Selon un sixième aspect de l'invention, l'invention concerne un procédé de transmission d'une commande entre un serveur d'administration et un dispositif compris dans un système de communication basé sur un système de gestion automatique de relevés de compteurs électriques, dit système AMM, le système AMM comprenant au moins un concentrateur de données auquel sont rattachés des compteurs électriques intelligents, dit compteurs, via un premier réseau par courants porteurs en ligne, chaque concentrateur de données étant connecté à un système de gestion comprenant le serveur d'administration et une entité de gestion via un deuxième réseau et servant de relais entre lesdits compteurs et le système de gestion. Le système de communication comprend un équipement, associé audit dispositif et connecté à un concentrateur de données, dit concentrateur relai, via un troisième réseau, l'équipement comprenant au moins une première interface de communication avec un premier quatrième réseau de type à grande portée et à faible consommation d'énergie, dit réseau de type LPWAN, ledit réseau de type LPWAN permettant à au moins un dispositif connecté audit réseau de type LPWAN de communiquer avec l'équipement en utilisant un protocole propriétaire utilisant une couche physique identique à une couche physique utilisée par le protocole LoRaWAN et des trames comprenant une charge utile de niveau applicatif ayant un format propriétaire, et/ou au moins une deuxième interface de communication avec un deuxième quatrième réseau de type filaire dans lequel chaque donnée ou commande transmise est transmise dans une trame conforme au protocole Modbus. Le procédé comprend transmettre une commande audit dispositif, par le serveur d'administration, via l'entité de gestion, le concentrateur relai auquel est rattaché l'équipement associé audit dispositif et l'équipement associé audit dispositif.

Selon un septième aspect de l'invention, l'invention concerne un programme d'ordinateur, comprenant des instructions pour mettre en œuvre, par un dispositif, le procédé selon le troisième aspect ou au moins une étape du procédé selon le quatrième le cinquième, ou le sixième aspect lorsque ledit programme est exécuté par un processeur dudit dispositif.

Selon un huitième aspect de l'invention, l'invention concerne des moyens de stockage, stockant un programme d'ordinateur comprenant des instructions pour mettre en œuvre, par un dispositif, le procédé selon le troisième aspect ou au moins une étape du procédé selon le quatrième, le cinquième ou le sixième aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un exemple de système de communication par courants porteurs en ligne dans lequel est mise en œuvre l'invention ;
- la Fig. 2 illustre schématiquement un exemple d'architecture matérielle d'un module de traitement;
- la Fig. 3 illustre schématiquement une trame de niveau physique selon l'invention échangée entre un capteur ou un actionneur et une centrale de mesure selon l'invention ;
- la Fig. 4A illustre schématiquement un premier exemple de charge utile d'une trame de niveau physique selon l'invention destinée à transporter des données ou des commandes;
- la Fig. 4B illustre schématiquement un deuxième exemple de charge utile d'une trame de niveau physique selon l'invention destinée à transporter une requête de connexion à un réseau;
- la Fig. 4C illustre schématiquement un troisième exemple de charge utile d'une trame de niveau physique selon l'invention destinée à transporter une autorisation de connexion à un réseau;
- la Fig. 5 illustre schématiquement une charge utile de niveau MAC comprise dans la charge utile d'une trame de niveau physique selon l'invention;
- la Fig. 6 illustre schématiquement une charge utile de niveau applicatif comprise dans la charge utile de niveau MAC ;
- la Fig. 7 illustre schématiquement un exemple de procédure de connexion à un réseau de type LPWAN permettant à une centrale de mesure et à un capteur ou un actionneur de communiquer ;
- la Fig. 8 illustre schématiquement un exemple de procédure de transmission d'une commande à un actionneur ; et,
- la Fig. 9 illustre schématiquement un exemple de procédure de transmission de données émanant d'un capteur.

L'invention est décrite dans un contexte de système de type AMM utilisé pour superviser un réseau BT dans lequel on souhaite insérer des dispositifs permettant une gestion intelligente dudit réseau BT. Les dispositifs décrits par la suite sont des capteurs, tels que des capteurs de température, de pression ou de mouvement et des actionneurs. L'invention est aussi adaptée à d'autres contextes où l'insertion de dispositifs n'aurait pas pour objectif de permettre une gestion d'un réseau BT. Par exemple, l'invention pourrait permettre à des objets connectés qui ne seraient pas à portée d'un réseau LPWAN tel qu'un réseau LoRa, de remonter de l'information vers un serveur de gestion par l'intermédiaire du réseau BT.

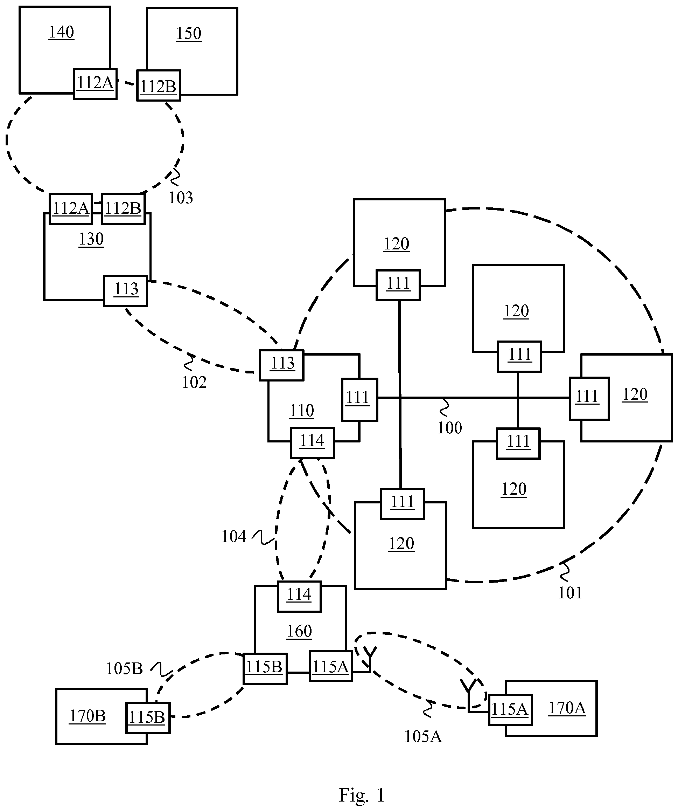

La **Fig. 1** illustre schématiquement un exemple de mise en œuvre de l'invention dans un système de type AMM.

Le système de type AMM de la Fig. 1 comporte une entité de gestion 130, aussi appelée tête de système (« Head-end system » en terminologie anglo-saxonne) et une pluralité de compteurs 120. L'entité de gestion 130 est notamment en charge de collecter des informations transmises par les compteurs 120, telles que des informations de relevés de consommation électrique d'installations électriques que lesdits compteurs 120 sont en charge de surveiller. Pour permettre auxdits compteurs 120 de transmettre lesdites informations à l'entité de gestion 130, des communications CPL sont établies entre chacun desdits compteurs 120 et un concentrateur de données 110. Le système de communication comporte typiquement une pluralité de concentrateurs de données 110, un seul étant représenté sur la Fig. 1. A chaque concentrateur de données 110 est connecté, de manière logique, une pluralité de compteurs 120, chaque concentrateur de données 110 servant ainsi de relais entre lesdits compteurs 120 qui lui sont connectés et l'entité de gestion 130.

Un réseau CPL 101 est ainsi formé entre chaque concentrateur de données 110 et la pluralité de compteurs 120 qui lui est connectée. Ce réseau CPL 101 s'appuie sur un réseau de distribution électrique *(i.e.* réseau BT) 100 servant à alimenter en électricité les installations électriques que lesdits compteurs 120 sont en charge de surveiller. Chaque compteur 120 comporte ainsi une interface 111 de communication CPL permettant de communiquer via le réseau CPL 101. De même, chaque concentrateur de données 110 comporte une telle interface 111 de communication CPL permettant de communiquer via le réseau CPL 101. Selon un exemple de réalisation, le réseau CPL 101 est conforme au protocole G3-PLC. Selon un autre mode de réalisation, le réseau CPL 101 est conforme au protocole PRIME.

Pour permettre de relayer les informations transmises par les compteurs 120 à destination de l'entité de gestion 130, chaque concentrateur de données 110 comporte en outre une interface 113 de communication avec un réseau de communication 102, auquel est aussi connectée l'entité de gestion 130. Etant donné que les concentrateurs de données 110 peuvent être typiquement installés au sein de postes de transformation du réseau BT 100, le réseau de communication 102 est préférentiellement un réseau de télécommunication sans-fil. Selon un mode de réalisation, le réseau de communication 102 est conforme au standard UMTS (« Universal Mobile Telecommunications System » en terminologie anglo-saxonne). Selon un autre mode de réalisation, le réseau de communication 102 est conforme au standard LTE (« Long Term Evolution » en terminologie anglo-saxonne).

L'entité de gestion 130 comporte ainsi une interface 113 de communication via le réseau de communication 102 lui permettant de communiquer avec une pluralité de concentrateurs de données 110. L'entité de gestion 130 est préférentiellement conforme à l'ensemble de standards IEC 62056, *i.e.* aux spécifications DLMS (« Device Language Message Spécification » en terminologie anglo-saxonne) et COSEM (« Companion Specification for Energy Metering » en terminologie anglo-saxonne).

Le système de communication de la Fig. 1 comprend de plus un serveur MDM (gestion de mesures de consommation électrique : « Meter Data Management (MDM) » en terminologie anglo-saxonne) 140. Le serveur MDM 140 reçoit les informations de mesure de consommation électrique collectées par l'entité de gestion 130 et les traite.

Pour permettre au serveur MDM 140 de recevoir les informations de mesure de consommation électrique collectées par l'entité de gestion 130, le serveur MDM 140 et l'entité de gestion 130 comportent en outre une interface de communication 112A avec un réseau de communication 103. Le réseau de communication 103 est préférentiellement un réseau de type IP (« Internet Protocol » en terminologie anglo-saxonne, tel que défini dans le document normatif RFC 791), tel que l'Internet. Dans un mode de réalisation, les communications entre l'entité de gestion 130 et le serveur MDM 140 utilisent des requêtes HTTP.

Au moins un concentrateur de données 110 de système de type AMM de la Fig. 1 comporte une interface de communication 114 avec un réseau de communication 104 sur lequel est connectée par une même interface de communication 114 une unité 160 appelée *centrale de mesure.* Par la suite, chaque concentrateur de données 110 comportant une interface de communication 114 est appelé *concentrateur relai.* Un concentrateur de données est configuré en concentrateur relai par exemple lorsqu'il se situe dans une zone non couverte par un réseau LPWAN tel qu'un réseau LoRa. Une centrale de mesure 160 communiquant avec un concentrateur relai 110 est dite *rattachée* audit concentrateur relai 110. Dans un mode de réalisation, le réseau 104 est un réseau Ethernet (ISO/IEC 8802-3). La centrale de mesure 160 implémente un serveur DLMS et le concentrateur relai 110 auquel elle est rattachée implémente un client DLMS.

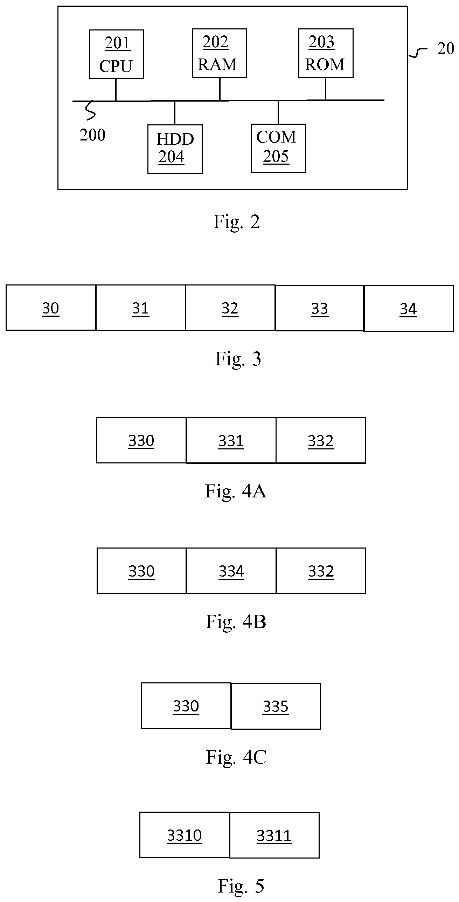

La centrale de mesure 160 comprend au moins une interface de communication 115A avec un réseau 105A de type LPWAN utilisant la même couche physique que les réseaux LoRa. Le réseau 105A permet à la centrale de mesure 160 de communiquer avec au moins un dispositif 170A, chaque dispositif 170A étant connecté au réseau 105A par l'intermédiaire d'une interface de communication 115A. Dans la Fig. 1, seul un dispositif 170A est représenté. Le dispositif 170A peut être un capteur ou un actionneur. La centrale de mesure 160 et le dispositif 170A communiquent selon un protocole propriétaire similaire au protocole LoRaWAN que nous décrivons par la suite en relation avec les Figs 3, 4A, 4B, 4C, 5 et 6.

Dans un mode de réalisation, la centrale de mesure 160 comprend de plus une interface de communication 115B. L'interface de communication 115B permet à la centrale de mesure 160 de communiquer avec au moins dispositif 170B. Le dispositif 170B peut être un actionneur ou un capteur. Chaque dispositif 170B possède une interface 115B. Chaque interface de communication 115B est connectée à un réseau de communication 105B filaire de type RS485. Dans la Fig. 1, seul un dispositif 170B est représenté. Le dispositif 170B communique avec la centrale de mesure 160 selon le protocole Modbus.

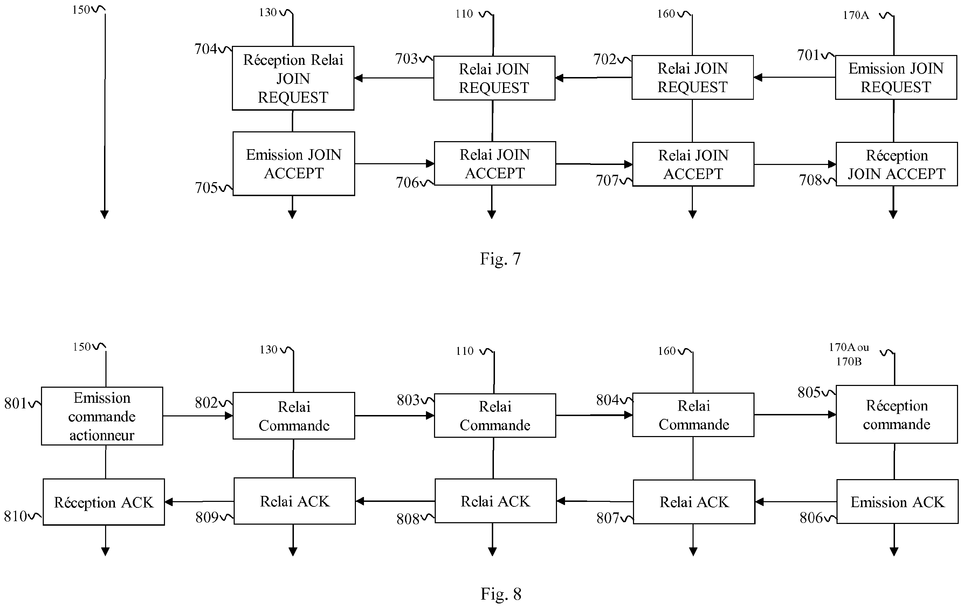

Comme nous le verrons par la suite en relation avec la Fig. 7, la centrale de mesure 160 reçoit des informations des dispositifs 170A, lorsque ces dispositifs sont des capteurs, et analyse ces informations. En fonction d'un résultat de cette analyse, la centrale de mesure 160 génère des alarmes si nécessaire et transmet chaque alarme générée à destination d'un serveur d'administration 150 compris dans le système de communication 1. Le serveur d'administration ou serveur ADMS (système de gestion avancé de la distribution : « advanced distribution management system (ADMS) » en terminologie anglo-saxonne) 150 collecte les alarmes émanant de la centrale de mesure et les traite. Chaque transmission d'une alarme entre la centrale de mesure 160 et le serveur d'administration 150 se fait via le concentrateur relai 110 avec lequel la centrale de mesure 160 est rattachée et l'entité de gestion 130. Comme le serveur MDM 140, le serveur d'administration 150 comporte une interface de communication 112A avec le réseau de communication 103. Les communications entre l'entité de gestion 130 et le serveur d'administration 150 utilisent par exemple des requêtes HTTP.

Par ailleurs, comme nous le décrivons par la suite en relation avec la Fig. 8, la centrale de mesure 160 relaie des commandes destinées aux dispositifs 170A ou 170B, lorsque ces dispositifs sont des actionneurs, émanant du serveur de gestion 150. Les commandes, lorsqu'elles sont destinées à un actionneur 170A sont appelées *commandes propriétaires.* Les commandes, lorsqu'elles sont destinées à un dispositif 170B de type actionneur sont conformes au protocole Modbus et sont appelées *commandes Modbus.* Chaque transmission d'une commande depuis le serveur d'administration 150 à destination des dispositifs 170A ou 170B de type actionneur se fait via l'entité de gestion 130 et le concentrateur relai 110 auquel est rattachée la centrale de mesure 160.

Une centrale de mesure 160 a donc des capacités accrues par rapport à une passerelle LoRa classique. En effet, chaque centrale de mesure 160 est non seulement capable de relayer des données entre un objet tel qu'un capteur ou un actionneur et un serveur d'administration 150, mais aussi d'analyser certaines données récoltées et de ne transmettre une alarme à destination du serveur d'administration 150 qu'en fonction du résultat de l'analyse. Cette capacité d'analyse présente un intérêt important puisqu'elle limite un nombre de communications entre chaque centrale de mesure 160 et le serveur d'administration 150 au strict nécessaire. On réduit ainsi les risques de congestionner les réseaux impliqués dans les communications entre les dispositifs 170A et 170B et le serveur d'administration 150 *(i.e.* le réseau 103 et le réseau 102).

Dans un autre mode de réalisation, le réseau 104 est un réseau CPL.

Dans un mode de réalisation, la centrale de mesure 160 rattachée à un concentrateur relai est intégrée dans le concentrateur relai 110.

Chaque entité du système de la Fig. 1, que ce soit un concentrateur de données 110, un compteur 120, ou l'entité de gestion 130 comprend un module de traitement 20 (non représenté) permettant à ces entités de participer à une mise en œuvre de l'invention.

La **Fig. 2** illustre schématiquement un exemple d'architecture matérielle du module de traitement 20.

Le module de traitement 20 comprend alors, reliés par un bus de communication 200: un processeur ou CPU 201 ; une mémoire vive RAM 202 ; une mémoire morte ROM 203 ; une unité de stockage ou un lecteur de support de stockage, tel qu'un lecteur de cartes SD 204 ; un ensemble d'interfaces de communication 205 permettant au module de traitement 20 de communiquer avec d'autres entités du système de la Fig. 1.

Lorsque le module de traitement 20 est compris dans un compteur 120, l'ensemble d'interfaces de communication 205 comprend l'interface de communication 111 vers le réseau CPL 101.

Lorsque le module de traitement 20 est compris dans un concentrateur de données 110, l'ensemble d'interfaces de communication 205 comprend l'interface de communication 111 vers le réseau CPL 101 et l'interface de communication 113 vers le réseau de communication 102.

Lorsque le module de traitement 20 est compris dans un concentrateur de données 110 qui fait office de concentrateur relai, l'ensemble d'interfaces de communication 205 comprend en outre l'interface de communication 114 vers le réseau 104.

Lorsque le module de traitement 20 est compris dans l'entité de gestion 130, l'ensemble d'interfaces de communication 205 comprend l'interface de communication 113 vers le réseau de communication 102, l'interface de communication 112A vers le réseau communication 103 et l'interface de communication 112B vers le réseau de communication 103.

Lorsque le module de traitement 20 est compris dans le serveur MDM 140, l'ensemble d'interfaces de communication 205 comprend l'interface de communication 112A vers le réseau 103.

Lorsque le module de traitement 20 est compris dans le serveur d'administration 150, l'ensemble d'interfaces de communication 205 comprend l'interface de communication 112B vers le réseau 103.

Lorsque le module de traitement 20 est compris dans la centrale de mesure 160, l'ensemble d'interfaces de communication 205 comprend l'interface de communication 114 vers le réseau 104, au moins l'interface de communication 115A vers le réseau 105A et optionnellement l'interface de communication 115B vers le réseau de communication 105B.

Lorsque le module de traitement 20 est compris dans un dispositif 170A, l'ensemble d'interfaces de communication 205 comprend l'interface de communication 115A vers le réseau 105A.

Lorsque le module de traitement 20 est compris dans un dispositif 170B de type actionneur, l'ensemble d'interfaces de communication 205 comprend l'interface de communication 115B vers le réseau 105B.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication. Lorsque l'entité *(i.e.* le concentrateur de données 110, un compteur 120, l'entité de gestion 130, le serveur MDM 140, le serveur d'administration 150, une centrale de mesure 160, un dispositif 170A, un dispositif 170B) est mise sous tension, le processeur 201 est capable de lire de la RAM 202 des instructions et de les exécuter. Ces instructions forment un programme d'ordinateur causant la mise en œuvre, par le processeur 201 d'une partie du procédé décrit en relation avec les Figs. 7, 8 et 9 concernant ladite entité.

Tout ou partie du procédé décrit en relation avec les Figs. 7, 8 et 9 peut être implémenté sous forme logicielle par exécution d'un ensemble d'instructions par une machine programmable, telle qu'un DSP (« Digital Signal Processor » en terminologie anglo-saxonne) ou un microcontrôleur, ou être implémenté sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

Les Figs. 3, 4A, 4B, 4C, 5 et 6 décrivent une syntaxe de trames de niveau physique utilisée pour les trames échangées entre une centrale de mesure 160 et un dispositif 170A.

La **Fig. 3** illustre schématiquement une trame de niveau physique selon l'invention échangée entre un dispositif 170A et une centrale de mesure 160.

La trame de niveau physique représentée en Fig. 3 est très similaire à une trame de niveau physique conforme au protocole LoRaWAN. Ces trames sont utilisées sur le réseau 105A entre les dispositifs 170A et les centrales de mesure 160. La trame comprend en effet un champ *preamble,* un champ *PDHR,* un champ *PHDR_CRC* et un champ *CRC* dont le format et la sémantique sont strictement identiques au format des champs portant le même nom dans le protocole LoRaWAN. Seul un champ *PHYPayload* représentant une charge utile (« payload » en terminologie anglo-saxonne) de niveau physique de la trame diffère du champ de même nom dans le protocole LoRaWAN. Nous détaillons le champ *PHYPayload* en relation avec les Figs. 4A, 4B, 4C, 5 et 6.

La **Fig. 4A** illustre schématiquement un premier exemple de charge utile d'une trame de niveau physique selon l'invention destinée à transporter des données ou des commandes propriétaires.

Dans l'exemple de la Fig. 4A, la charge utile d'une trame de niveau physique comprend un champ *MHDR* 330, un champ *payload* 331 et un champ *MIC* 332. Le format et la sémantique des champs *MHDR* 330 et *MIC* 332 sont strictement identiques au format et à la sémantique des champs de même nom dans le protocole LoRaWAN. Le champ *MHDR* 330 est un entête de niveau MAC (contrôle d'accès au medium, « Médium Access Control » en terminologie anglo-saxonne) et comprend deux champs : un champ *MTYPE* et un champ *RFU.* Le champ RFU (« Reserved for Future Use » en terminologie anglo-saxonne) est un champ réservé pour des utilisations futures. Le champ *MTYPE* indique le type de la trame. Des types de trames sont définis dans le protocole LoRaWAN sous forme de valeurs binaires à trois bits. Par exemple, la valeur binaire «000 » correspond à une trame de demande de connexion (« Join Request » en terminologie anglo-saxonne). La valeur binaire «001 » correspond à une trame d'autorisation de connexion (« Join Accept » en terminologie anglo-saxonne). La valeur binaire «111 » est laissée libre pour permettre de définir une trame propriétaire. Dans le cadre de l'invention, la valeur binaire « 111 » est utilisée pour définir des trames permettant d'échanger des données ou des commandes propriétaires avec des capteurs.

Le champ *payload* 331 correspond à une charge utile de niveau MAC que nous détaillons par la suite en relation avec la Fig. 5.

La **Fig. 4B** illustre schématiquement un deuxième exemple de charge utile d'une trame de niveau physique selon l'invention destinée à transporter une requête de connexion à un réseau.

Dans l'exemple de la Fig. 4B, la charge utile d'une trame de niveau physique comprend un champ *MHDR* 330, un champ *Join-Request* 334 et un champ *MIC* 332. Le Champ *Join-Request* 334 est identique au champ de même nom du protocole LoRaWan. On appellera par la suite une trame de niveau physique comprenant un champ *Join-Request* 334 une *requête de connexion.* Lorsque le champ *Join-Request* 334 est présent dans une trame, le champ *MTYPE* prend la valeur binaire « 000 ».

La **Fig. 4C** illustre schématiquement un troisième exemple de charge utile d'une trame de niveau physique selon l'invention destinée à transporter une autorisation de connexion à un réseau.

Dans l'exemple de la Fig. 4C, la charge utile d'une trame de niveau physique comprend un champ *MHDR* 330 et un champ *Join-Accept* 335. Le Champ *Join-Accept* 335 est identique au champ de même nom du protocole LoRaWan. On appellera par la suite une trame de niveau physique comprenant un champ *Join-Accept* 335 une *requête d'autorisation de connexion.* Lorsque le champ *Join-Accept* 335 est présent dans une trame, le champ *MTYPE* prend la valeur binaire « 001 ».

La **Fig. 5** illustre schématiquement une charge utile de niveau MAC comprise dans la charge utile d'une trame de niveau physique selon l'invention.

La charge utile de niveau MAC décrite en relation avec la Fig. 5 correspond au champ *payload* 331 de la Fig. 4A. La charge utile de niveau MAC comprend un champ *FHDR* 3310 et un champ *FRMPayload* 3311. Le champ *FHDR* est identique au champ de même nom dans le protocole LoRaWAN. Le champ *FRMPayload* 3311 est un champ propriétaire. Lorsque le champ *FRMPayload* 3311 est présent dans une trame, le champ *MTYPE* prend la valeur binaire « 111 ».

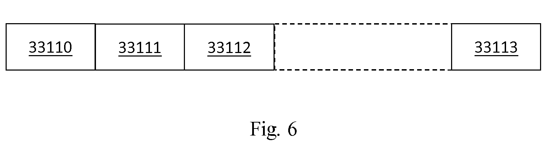

La **Fig. 6** illustre schématiquement une charge utile de niveau applicatif comprise dans la charge utile de niveau MAC.

La charge utile de niveau applicatif correspond au champ *FRMPayload* 3311 de la Fig. 5.

La charge utile de niveau applicatif comprend un champ *DeviceType* 33110 codé sur un octet, un champ *CommandDataType* 33111 codé sur un octet, un champ *NumData* 33112 codé sur un octet, et une suite de champs optionnels de un octet *data* 33113 destinés à recevoir des données à transmettre.

Le champ *DeviceType* 33110 permet de définir un type de dispositif impliqué soit en tant que destinataire soit en tant qu'émetteur de la trame. Dans un mode de réalisation, le champ *Device Type* 33110 prend la valeur « 0 » pour un actionneur et la valeur « 1 » pour un capteur.

Le champ *CommandDataType* 33111 permet de transporter une valeur représentative d'une commande lorsque le champ *DeviceType* 33110 est à « 0 », une valeur représentative d'un type de données lorsque le champ *DeviceType* 33110 est à « 1 » et une valeur représentative d'un accusé de réception, communément appelé ACK, que la valeur du champ *DeviceType* 33110 soit « 0 » ou « 1 ».

Lorsque la commande est une fermeture, le champ *CommandDataType* 33111 prend la valeur « 0 ».

Lorsque la commande est une ouverture, le champ *CommandDataType* 33111 prend la valeur « 1 ».

Lorsque la trame est un accusé de réception, le champ *CommandDataType* 33111 prend la valeur « 2 ».

Lorsque le dispositif impliqué en tant que destinataire ou émetteur de la trame est un capteur, le champ *CommandDataType* 33111 peut prendre une pluralité de valeurs comprenant les valeurs suivantes :
- « 3 » lorsque le capteur est un capteur de température. Les données transportées sont alors des données représentatives d'une température.
- « 4 » lorsque le capteur est un capteur de pression. Les données transportées sont alors des données représentatives d'une pression.
- « 5 » lorsque le capteur est un capteur d'humidité. Les données transportées sont alors des données représentatives d'un taux d'humidité.
- « 6 » lorsque le capteur est un capteur de mouvement. Les données transportées sont alors des données représentatives d'une amplitude de mouvement.
- « 7 » lorsque le capteur est un capteur de champ magnétique. Les données transportées sont alors des données représentatives d'une norme, d'une direction et d'un sens d'un champ magnétique.
- « 8 » lorsque le capteur est un capteur de luminosité. Les données transportées sont alors des données représentatives d'un niveau de luminosité.

La pluralité de valeurs, et donc les types de capteurs, n'est pas limitative

Le champ *NumData* 33112 indique combien d'octets de données sont présents dans la trame, *i.e.* combien de champs *data* 33113 sont présents dans la trame. Le champ *NumData 33112* prend la valeur « 0 » lorsque le dispositif concerné est un actionneur ou que la trame transporte un accusé de réception. Lorsque la trame transporte des données, le champ *NumData* 33112 prend une valeur supérieure ou égale à l'unité.

Une trame de niveau physique telle que décrite en relation avec la Fig. 3 comportant un champ *FRMPayload* 3311 dont le champ *Device Type* 33110 est à la valeur « 0 » et dont le champ *CommandDataType* 33111 est à la valeur « 0 » ou « 1 » est une commande propriétaire.

Une trame de niveau physique telle que décrite en relation avec la Fig. 3 comportant un champ *FRMPayload* 3311 dont le champ *Device Type* 33110 est à la valeur « 0 » ou « 1 » et dont le champ *CommandDataType* 33111 est à la valeur « 2 » est appelée *ACK propriétaire* par la suite.

Une trame de niveau physique telle que décrite en relation avec la Fig. 3 comportant un champ *FRMPayload* 3311 dont le champ *Device Type* 33110 est à la valeur « 1 » et dont le champ *CommandDataType* 33111 est à la valeur « 3 » ou « 4 » ou « 5 » ou « 6 » ou « 7 » ou « 8 » mais dont le champ *NumData 33112* est à la valeur « 0 » est appelée *requête de données propriétaire* par la suite.

Une trame de niveau physique telle que décrite en relation avec la Fig. 3 comportant un champ *FRMPayload* 3311 dont le champ *Device Type* 33110 est à la valeur « 1 », dont le champ *CommandDataType* 33111 est à la valeur « 3 » ou « 4 » ou « 5 » ou « 6 » ou « 7 » ou « 8 » et dont le champ *NumData 33112* est à une valeur supérieure ou égale à l'unité est appelée *paquet de données propriétaire* par la suite.

On note que les trames de niveau physique sont encryptées conformément au protocole LoRaWAN. Chaque dispositif capteur ou actionneur possède des identifiants DevEUI et AppEUI (aussi appelé JoinEUI), des clés AppKey et NetSKey tels que définis dans le protocole LoRaWAN préprogrammés en usine.

Comme dans un réseau LoRa classique dans lequel un objet connecté doit exécuter une procédure de connexion au réseau LoRa pour pouvoir communiquer sur ledit réseau, chaque dispositif 170A doit exécuter une procédure de connexion au réseau de type LPWAN 105A pour pouvoir communiquer avec une centrale de mesure 160.

La **Fig. 7** illustre schématiquement un exemple de procédure de connexion au réseau de type LPWAN 105A permettant à la centrale de mesure 160 et au dispositif 170A de communiquer.

Dans une étape 701, le dispositif 170A génère une requête de connexion telle que décrite en relation avec les Figs. 3 et 4B et émet cette requête de connexion en mode multidiffusion.

Chaque centrale de mesure 160 à portée du dispositif 170A reçoit cette requête de connexion, encapsule cette requête de connexion dans une trame conforme aux spécifications DLMS/COSEM, et transmet la trame ainsi formée au concentrateur relai 110 auquel est rattachée la centrale de mesure 160 dans une étape 702.

Dans une étape 703, chaque concentrateur relai 110 auquel est rattachée une centrale de mesure 160 ayant relayé la requête de connexion, reçoit une trame conforme aux spécifications DLMS/COSEM encapsulant la requête de connexion, et retransmet ladite trame à l'entité de gestion 130.

Dans une étape 704, pour une même requête de connexion émanant d'un dispositif 170A, l'entité de gestion 130 peut donc recevoir une pluralité de trames conformes aux spécifications DLMS/COSEM. L'entité de gestion 130 doit décider avec quelle centrale de mesure 160 le dispositif 170A doit être associé. Lorsqu'une seule centrale de mesure 160 a relayé la requête de connexion du dispositif 170A, l'entité de gestion 130 associe cette centrale de mesure 160 au dispositif 170A. Si plusieurs centrales de mesure 160 ont relayé la requête de connexion du dispositif 170A, l'entité de gestion 103 choisit l'une de ces centrales de mesure 160, et associe la centrale de mesure 160 choisie au dispositif 170A. Dans un mode de réalisation, l'entité de gestion 103 choisit la centrale de mesure 160 aléatoirement parmi les centrales de mesure 160 ayant relayé la requête de connexion.

Dans une étape 705, l'entité de gestion 103 génère une requête d'autorisation de connexion destinée au dispositif 170A, encapsule cette requête dans une trame conforme aux spécifications DLMS/COSEM et transmet la requête ainsi encapsulée au concentrateur relai 110 auquel est rattachée la centrale de mesure 160 choisie par l'entité de gestion 103, dite *centrale de mesure choisie.*

Dans une étape 706, le concentrateur relai 110 auquel est rattachée la centrale de mesure 160 choisie reçoit la trame conforme aux spécifications DLMS/COSEM comprenant la requête d'autorisation de connexion et retransmet ladite trame à la centrale de mesure 160 choisie.

Dans une étape 707, la centrale de mesure 160 choisie reçoit la trame conforme aux spécifications DLMS/COSEM comprenant la requête d'autorisation de connexion, extrait la requête d'autorisation de connexion et transmet cette requête d'autorisation de connexion en point à point au capteur 170A.

Dans une étape 708, le dispositif 170A reçoit la requête d'autorisation de connexion.

A la suite de cette procédure de connexion, le dispositif 170A ne communique qu'avec la centrale de mesure 160 choisie. Lorsque le dispositif 170A est un capteur, si des données remontées par le dispositif 170A déclenchent une alarme, cette alarme générée par la centrale de mesure 160 choisie est remontée vers le serveur d'administration 150 via le concentrateur relai 110 auquel est rattachée la centrale de mesure 160 choisie.

Dans le cas des dispositifs 170B, la procédure de connexion est quasiment identique. Dans ce cas toutefois, lorsqu'on rattache un dispositif 170B en Modbus à la centrale de mesure 160, un adressage de type Modbus est réalisé localement (entre la centrale de mesure 160 et le ou les dispositifs 170B). Afin que l'entité de gestion 130 ait connaissance des dispositifs 170B connectés à la centrale de mesure 160, la centrale de mesure 160 fait passer chacun de ces dispositifs 170B pour un dispositif virtuel 170B'. Un dispositif virtuel 170B' est un logiciel exécuté par la centrale de mesure 160 implémentant chaque fonctionnalité et émulant un comportement d'un dispositif 170B correspondant. La centrale de mesure 160 exécute ensuite les étapes 701, 702, 707 et 708 de la procédure de connexion décrite en relation avec la Fig. 7 pour chaque dispositif 170B. Dans la procédure de connexion de la Fig. 7, le dispositif 170A est remplacé par un dispositif virtuel 170B' créé par la centrale de mesure 160. Lors de l'étape 704, l'entité de gestion 130 ne peut donc recevoir qu'une seule trame conforme aux spécifications DLMS/COSEM pour la requête de connexion émanant du dispositif virtuel 170B'. Il n'y a donc pas de choix de la centrale de mesure 160 à associer au dispositif virtuel 170B'. La centrale de mesure 160 associée au dispositif virtuel 170B' est nécessairement la centrale de mesure ayant créé le dispositif virtuel 170B'. L'exécution de la procédure de connexion permet à la centrale de mesure 160 de mettre en correspondance chaque dispositif virtuel 170B' avec le dispositif 170B correspondant.

Lorsque le dispositif 170A est un actionneur, chaque commande propriétaire émanant du serveur d'administration 150 destinée au dispositif 170A transite par la centrale de mesure 160 choisie et par le concentrateur relai 110 auquel est rattachée la centrale de mesure 160 choisie.

La **Fig. 8** illustre schématiquement un exemple de procédure de transmission d'une commande à un actionneur.

Chaque commande destinée à un actionneur est générée par le serveur d'administration 150. Dans la suite de la description de la Fig. 8, le dispositif 170A étant un actionneur, nous parlons d'actionneur 170A.

Dans une étape 801, le serveur d'administration 150 génère une commande propriétaire (respectivement Modbus) destinée à un actionneur 170A (respectivement 170B). Cette commande propriétaire ou Modbus est encapsulée dans une requête HTTP et transmise à l'entité de gestion 130.

Dans une étape 802, l'entité de gestion 130 reçoit la requête HTTP, insère la commande propriétaire (respectivement Modbus) dans une trame conforme aux spécifications DLMS/COSEM et transmet la trame à destination du concentrateur relai 110 auquel est rattachée la centrale de mesure 160 choisie pour l'actionneur 170A (respectivement 170B).

Dans une étape 803, le concentrateur relai 110 reçoit la trame conforme aux spécifications DLMS/COSEM et retransmet ladite trame à destination de la centrale de mesure 160 choisie.

Dans une étape 804, la centrale de mesure 160 choisie reçoit la trame conforme aux spécifications DLMS/COSEM et transmet la commande propriétaire (respectivement Modbus) à l'actionneur 170A (respectivement 170B).

Dans une étape 805, l'actionneur 170A (respectivement 170B) reçoit la commande et lance une procédure d'exécution de la commande.

Dans une étape 806, l'actionneur 170A (respectivement 170B) génère un ACK propriétaire (respectivement une trame d'accusé de réception conforme au protocole Modbus appelé par la suite *ACK Modbus).* L'ACK propriétaire (respectivement l'ACK Modbus) est transmis à la centrale de mesure 160 choisie associée à l'actionneur 170A (respectivement 170B).

Dans une étape 807, la centrale de mesure 160 reçoit l'ACK propriétaire (respectivement l'ACK Modbus), insère cet ACK propriétaire (respectivement cet ACK Modbus) dans une trame conforme aux spécifications DLMS/COSEM et transmet ladite trame au concentrateur relai 110 à laquelle est rattachée la centrale de mesure 160 choisie.

Dans une étape 808, le concentrateur relai 110 reçoit la trame conforme aux spécifications DLMS/COSEM et retransmet ladite trame à l'entité de gestion 130.

Dans une étape 809, l'entité de gestion reçoit la trame conforme aux spécifications DLMS/COSEM, insère le ACK propriétaire (respectivement le ACK Modbus) dans une requête HTTP et transmet la requête HTTP au serveur d'administration 150. Le serveur d'administration 150 sait alors que la commande propriétaire (respectivement Modbus) a été exécutée par l'actionneur 170A (respectivement 170B).

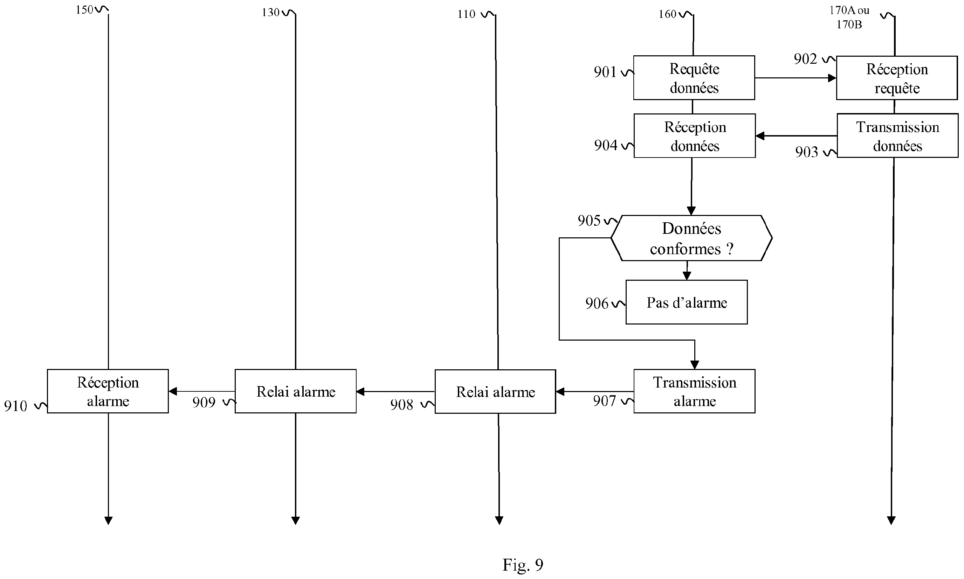

La **Fig. 9** illustre schématiquement un exemple de procédure de transmission de données émanant d'un capteur.

La procédure décrite en relation avec la Fig. 9 concerne les dispositifs 170A de type capteur, appelés capteurs 170A dans la suite de la description de la Fig. 9. Elle pourrait tout aussi bien s'appliquer aux dispositifs 170B de type capteur.

Dans une étape 901, la centrale de mesure 160 associée au capteur 170A transmet une requête de données propriétaire au capteur 170A.

Dans une étape 902, le capteur 170A reçoit la requête de données propriétaire.

Dans une étape 903, le capteur 170A transmet les données souhaitées à la centrale de mesure dans un paquet de données propriétaire.

Dans une étape 904, la centrale de mesure 160 reçoit le paquet de données propriétaire.

Dans une étape 905, la centrale de mesure 160 vérifie que chaque valeur représentée par les données reçues est conforme à un critère prédéterminé dépendant du type des données transmises. Si chaque valeur est conforme au critère prédéterminé, la centrale de mesure 160 décide de ne pas déclencher d'alarme lors d'une étape 906. Si au moins une valeur n'est pas conforme au critère prédéterminé, la centrale de mesure décide de déclencher une alarme lors d'une étape 907. Pour ce faire, lors de l'étape 907, la centrale de mesure 160 génère une requête représentative d'une alarme et transmet cette requête dans une trame conforme aux spécifications DLMS/COSEM au concentrateur relai 110 auquel est rattachée la centrale de mesure 160. Dans un mode de réalisation, la requête représentative d'une alarme comporte une information représentative d'un type d'alarme. Une information représentative d'un type d'alarme donne par exemple le type de capteur ayant provoqué l'alarme.

Dans une étape 908, le concentrateur relai 110 reçoit la trame conforme aux spécifications DLMS/COSEM et retransmet cette trame à l'entité de gestion 130.

Dans une étape 909, l'entité de gestion 130 reçoit la trame conforme aux spécifications DLMS/COSEM, insère la requête représentative d'une alarme dans une requête HTTP et transmet cette trame HTTP au serveur d'administration 150.

Dans un premier exemple, le capteur 170A est un capteur de température. Le critère prédéterminé dans ce cas est qu'aucune valeur de température mesurée par le capteur 170A (et reçue par la centrale de mesure 160) ne doit être en dehors d'un intervalle de valeurs comprises entre « -50 » degrés Celsius et « +100 » degrés Celsius. Une alarme est déclenchée quand ce critère portant sur les valeurs de température n'est pas respecté. Une information représentative d'un type d'alarme dans ce cas est que l'alarme a été déclenchée par une valeur remontée par un capteur de température.

Dans un deuxième exemple, le capteur 170A est un capteur de pression. Le critère prédéterminé dans ce cas est qu'aucune valeur de pression mesurée par le capteur 170A (et reçue par la centrale de mesure 160) ne doit être supérieure à un bar. Une alarme est déclenchée quand ce critère portant sur les valeurs de pression n'est pas respecté. Une information représentative d'un type d'alarme dans ce cas est que l'alarme a été déclenchée par une valeur remontée par un capteur de pression.

Suite à la réception de cette alarme, le serveur d'administration peut déclencher une action, par exemple en envoyant une commande à un actionneur.

Si par exemple, l'alarme a été déclenchée parce qu'un capteur de température placé à côté d'une installation électrique BT a remonté une valeur de température supérieure à « 100 » degrés Celsius, le serveur d'administration transmet une commande à un actionneur pour couper l'alimentation électrique de cette installation.

Si par exemple, l'alarme a été déclenchée parce qu'un capteur de pression placé à côté d'une installation électrique BT a remonté une valeur de pression supérieure à un bar, le serveur d'administration transmet une commande à un actionneur pour couper l'alimentation électrique de cette installation.

Dans un mode de réalisation, l'étape 901 n'est pas exécutée. Les capteurs 170A décident d'eux mêmes de transmettre un paquet de données propriétaire, sans y être invité par la centrale de mesure 160.

Dans un mode de réalisation, la centrale de mesure 160 ne déclenche une alarme que lorsqu'un nombre de capteurs 170A supérieur à un nombre de capteurs prédéfini remontent à ladite centrale de mesure 160 une valeur non-conforme à un critère prédéterminé dépendant du type des données transmises.

La procédure décrite en relation avec la Fig. 9 montre donc que toutes les données remontées par des capteurs 170A ne sont pas remontées par les centrales de mesure 160. Chaque centrale de mesure 160 ne transmet des informations liées aux données qu'elle reçoit uniquement quand cela est nécessaire, c'est-à-dire, quand une alarme doit être déclenchée. On peut considérer que le procédé décrit en relation avec la Fig. 9 est un procédé de remontée d'alarme.

On peut noter que l'entité de gestion 130 et le serveur d'administration 150 forment un système de gestion du réseau BT.

Dans un mode de réalisation, l'entité de gestion 130, le serveur d'administration 150 et optionnellement le serveur MDM 140 sont intégrés dans une seule et même entité.

Dans un mode de réalisation, les communications entre les dispositifs 170A et les centrales de mesure 160, entre les centrales de mesure 160 et les concentrateurs relais 110, entre les concentrateurs relais 110 et l'entité de gestion 130 et entre l'entité de gestion 130 et le serveur d'administration 150 sont sécurisées par des méthodes connues.

## Revendications

1. Equipement adapté pour être connecté à un système de gestion automatique de relevés de compteurs électriques, dit système AMM, le système AMM comprenant au moins un concentrateur de données (110) auquel sont rattachés des compteurs électriques intelligents (120), dits compteurs, via un premier réseau par courants porteurs en ligne (101), chaque concentrateur de données étant connecté à un système de gestion comprenant une entité de gestion (130) via un deuxième réseau (102) et servant de relais entre lesdits compteurs et le système de gestion, **caractérisé en ce que**:
l'équipement est connecté à un concentrateur de données, dit concentrateur relai via un troisième réseau (104),
ledit équipement comprend au moins une interface de communication (115A, 115B) avec un quatrième réseau (105A, 105B), ledit quatrième réseau permettant à au moins un dispositif connecté audit quatrième réseau de communiquer avec l'équipement, ledit équipement étant apte :
à recevoir des données d'un ou plusieurs dispositifs connectés au quatrième réseau, à vérifier que les données reçues sont conformes à un critère prédéterminé dépendant d'un type des données transmises et de transmettre une alarme à un serveur d'administration (150) compris dans le système de gestion en cas de non-conformité desdites données ; et,
apte à relayer une commande émise par le serveur d'administration et destinée à un dispositif connecté au quatrième réseau.

2. Equipement selon la revendication 1, l'équipement comprenant une première interface de communication (115A) avec un premier quatrième réseau (105A) de type à grande portée et à faible consommation d'énergie, dit réseau de type LPWAN, et/ou une seconde interface de communication (115B) avec un deuxième quatrième réseau (105B) de type filaire.

3. Système de communication basé sur un système de gestion automatique de relevés de compteurs électriques, dit système AMM, le système comprenant au moins un équipement selon la revendication 2.

4. Système selon la revendication 3, dans lequel chaque dispositif connecté au premier ou au deuxième quatrième réseau est un capteur ou un actionneur.

5. Système selon la revendication 4, dans lequel le deuxième quatrième réseau est un réseau de type RS485 et chaque donnée ou commande transmise par le deuxième quatrième réseau est transmise dans une trame conforme au protocole Modbus.

6. Système selon la revendication 4, dans lequel chaque donnée ou commande transmise sur le réseau de type LPWAN est transmise dans une trame conforme à un protocole propriétaire utilisant une couche physique identique à une couche physique utilisée par le protocole LoRaWAN et un format de charge utile de niveau applicatif propriétaire.

7. Système selon la revendication 6, dans lequel le format de charge utile propriétaire comprend un premier champ (33110) permettant de définir un type de dispositif impliqué soit en tant que destinataire soit en tant qu'émetteur de la trame, un deuxième champ (33111) permettant de transporter une valeur représentative d'une commande lorsque la trame est destinée à un dispositif de type actionneur, une valeur représentative d'un type de données lorsque la trame est échangée avec un dispositif de type capteur ou une valeur représentative d'un accusé de réception, un troisième champ (33112) indiquant combien d'octets de données sont présents dans la charge utile de la trame et optionnellement, en fonction d'une valeur du troisième champ, un ou plusieurs quatrièmes champs (33113) de données.

8. Système selon la revendication 6 ou 7, adapté pour exécuter une procédure de connexion lorsqu'un dispositif doit être connecté audit réseau de type LPWAN, la procédure de connexion comprenant :
- émettre (701), par ledit dispositif, une requête de connexion conforme au protocole propriétaire en mode multidiffusion ;
- relayer (702), par chaque équipement dudit système ayant reçu ladite requête, ladite requête vers le concentrateur relai auquel est rattaché l'équipement ;
- relayer (703), par chaque concentrateur relai auquel est rattaché un équipement ayant relayé la requête, ladite requête vers l'entité de gestion ;
- choisir (704), par l'entité de gestion, parmi les équipements ayant relayé ladite requête, un équipement à associer avec ledit dispositif ;
- transmettre (705, 706, 707, 708) audit dispositif, par l'entité de gestion, via le concentrateur relai auquel est rattaché l'équipement choisi et l'équipement choisi, une requête d'autorisation de connexion.

9. Système selon la revendication 5, adapté pour exécuter une procédure de connexion lorsqu'un dispositif doit être connecté à un équipement par ledit deuxième quatrième réseau, la procédure de connexion comprenant :
- créer par ledit équipement, un dispositif virtuel représentant le dispositif devant être connecté au deuxième quatrième réseau ;
- créer (701), par ledit dispositif virtuel, une requête de connexion conforme au protocole propriétaire ;
- transmettre (702, 703, 704), par l'équipement, à l'entité de gestion, via le concentrateur relai rattaché à l'équipement, la requête de connexion ;
- transmettre (705, 706, 707, 708) audit dispositif virtuel, par l'entité de gestion, via le concentrateur relai auquel est rattachée l'équipement et l'équipement, une requête d'autorisation de connexion.

10. Système selon la revendication 8 ou 9, adapté pour exécuter une procédure de transmission d'une commande à un dispositif de type actionneur, la procédure de transmission d'une commande comprenant transmettre (801, 802, 803, 804, 805) une commande audit dispositif de type actionneur, par le serveur d'administration, via l'entité de gestion, le concentrateur relai auquel est rattaché l'équipement associé audit dispositif de type actionneur et l'équipement associé audit dispositif de type actionneur.

11. Système selon la revendication 10, dans lequel la procédure de transmission d'une commande comprend en outre : transmettre, par ledit dispositif de type actionneur un accusé de réception pour la commande au serveur d'administration, via l'équipement associé audit dispositif de type actionneur, le concentrateur relai auquel est rattaché l'équipement associé audit dispositif de type actionneur et l'entité de gestion.

12. Système selon la revendication 8, adapté pour exécuter une procédure de transmission de données, la procédure de transmission de données comprenant, pour chaque dispositif de type capteur transmettant des données : transmettre (903), par ledit dispositif de type capteur, des données dans une trame conforme au protocole propriétaire à l'équipement associé audit dispositif de type capteur, la transmission de l'alarme au serveur d'administration en cas de non-conformité de données reçues par un équipement se faisant via le concentrateur relai auquel est rattaché l'équipement ayant constaté ladite non-conformité.

13. Système selon la revendication 12, dans lequel la transmission par ledit dispositif de type capteur des données dans une trame conforme au protocole propriétaire à l'équipement associé audit dispositif de type capteur fait suite à une réception par ledit dispositif de type capteur d'une requête (902) conforme au protocole propriétaire émise (901) par l'équipement demandant une transmission desdites données.

14. Procédé de remontée d'alarme exécuté par un équipement (160) connecté à un système de communication basé sur un système de gestion automatique de relevés de compteurs électriques, dit système AMM, le système AMM comprenant au moins un concentrateur de données (110) auquel sont rattachés des compteurs électriques intelligents (120), dits compteurs, via un premier réseau par courants porteurs en ligne (101), chaque concentrateur de données étant connecté à un système de gestion comprenant une entité de gestion (130) via un deuxième réseau (102) et servant de relais entre lesdits compteurs et le système de gestion,
ledit équipement (160) étant connecté à un concentrateur de données (110), dit concentrateur relai via un troisième réseau (104) et comprenant au moins :
- une première interface de communication (115A) avec un premier quatrième réseau (105A) de type à grande portée et à faible consommation d'énergie, dit réseau de type LPWAN, ledit réseau de type LPWAN permettant à au moins un dispositif connecté audit réseau de type LPWAN de communiquer avec l'équipement en utilisant un protocole propriétaire utilisant une couche physique identique à une couche physique utilisée par le protocole LoRaWAN et des trames comprenant une charge utile de niveau applicatif ayant un format propriétaire,
et/ou
- au moins une deuxième interface de communication (115B) avec un deuxième quatrième réseau (105B) de type filaire dans lequel chaque données ou commande transmise est transmise dans une trame conforme au protocole Modbus ;
le procédé comprenant :
- recevoir (904) d'un ou plusieurs dispositifs de type capteur (170A, 170B) des données ;
- vérifier (905) que les données reçues sont conformes à un critère prédéterminé dépendant d'un type des données transmises ; et,
- transmettre (907) une alarme à un serveur d'administration (150) compris dans le système de gestion en cas de non-conformité desdites données, la transmission se faisant via le concentrateur relai (110) et l'entité de gestion (130).

15. Procédé de communication entre un dispositif (170A) et un serveur d'administration (150) compris dans un système de communication basé sur un système de gestion automatique de relevés de compteurs électriques, dit système AMM, le système AMM comprenant au moins un concentrateur de données (110) auquel sont rattachés des compteurs électriques intelligents (120), dits compteurs, via un premier réseau par courants porteurs en ligne (101), chaque concentrateur de données étant connecté à un système de gestion comprenant le serveur d'administration (150) et une entité de gestion (130) via un deuxième réseau (102) et servant de relais entre lesdits compteurs et le système de gestion, le système de communication comprenant au moins un équipement (160) connecté à un concentrateur de données (110), dit concentrateur relai via un troisième réseau (104), l'équipement (160) comprenant au moins une interface de communication (115A) avec un quatrième réseau (105A) de type à grande portée et à faible consommation d'énergie, dit réseau de type LPWAN, ledit réseau de type LPWAN permettant à au moins un dispositif (170A, 170B) connecté audit réseau de type LPWAN de communiquer avec l'équipement (160) en utilisant un protocole propriétaire utilisant une couche physique identique à une couche physique utilisée par le protocole LoRaWAN et des trames comprenant une charge utile de niveau applicatif ayant un format propriétaire,
le procédé comprenant une procédure de connexion dudit dispositif (170A) audit quatrième réseau (105A), laquelle procédure comprend:
- émettre (701), par ledit dispositif (170A), une requête de connexion conforme audit protocole propriétaire en mode multidiffusion ;
- relayer (702), par chaque équipement dudit système recevant ladite requête, ladite requête vers le concentrateur relai auquel est rattaché l'équipement ;
- relayer (703), par chaque concentrateur relai auquel est rattaché un équipement ayant relayé la requête, ladite requête vers l'entité de gestion (130) ;
- choisir (704), par l'entité de gestion (130), parmi les équipements ayant relayé ladite requête, un équipement à associer avec ledit dispositif (170A) ;
- transmettre (705, 706, 707, 708) audit dispositif (170A), par l'entité de gestion (130), via le concentrateur relai (110) auquel est rattaché l'équipement choisi et l'équipement choisi, une requête d'autorisation de connexion,
- de sorte à permettre audit équipement de relayer des informations entre ledit dispositif (170A) et ledit serveur d'administration (150).

16. Procédé de communication entre un dispositif (170B) et un serveur d'administration (150) compris dans un système de communication basé sur un système de gestion automatique de relevés de compteurs électriques, dit système AMM, le système AMM comprenant au moins un concentrateur de données (110) auquel sont rattachés des compteurs électriques intelligents (120), dits compteurs, via un premier réseau par courants porteurs en ligne (101), chaque concentrateur de données étant connecté à un système de gestion comprenant le serveur d'administration (150) et une entité de gestion (130) via un deuxième réseau (102) et servant de relais entre lesdits compteurs et le système de gestion, le système de communication comprend au moins un équipement (160) connecté à un concentrateur de données (110), dit concentrateur relai via un troisième réseau (104), l'équipement (160) comprenant au moins une interface de communication (115B) avec un quatrième réseau (105B) de type filaire dans lequel chaque donnée ou commande transmise est transmise dans une trame conforme au protocole Modbus,
le procédé comprenant une procédure de connexion dudit dispositif (170B) audit quatrième réseau (105B), laquelle procédure comprend:
- créer par ledit équipement, un dispositif virtuel représentant le dispositif devant être connecté au quatrième réseau ;
- créer (701), par ledit dispositif virtuel, une requête de connexion conforme au protocole propriétaire ;
- transmettre (702, 703, 704), par l'équipement, à l'entité de gestion, via le concentrateur relai rattaché à l'équipement, la requête de connexion ;
- transmettre (705, 706, 707, 708) audit dispositif virtuel, par l'entité de gestion, via le concentrateur relai auquel est rattachée l'équipement et l'équipement, une requête d'autorisation de connexion,
- de sorte à permettre audit équipement de relayer des informations entre ledit dispositif (170B) et ledit serveur d'administration (150).

17. Procédé de transmission d'une commande entre un serveur d'administration (150) et un dispositif (170A, 170B) compris dans un système de communication basé sur un système de gestion automatique de relevés de compteurs électriques, dit système AMM, le système AMM comprenant au moins un concentrateur de données (110) auquel sont rattachés des compteurs électriques intelligents (120), dits compteurs, via un premier réseau par courants porteurs en ligne (101), chaque concentrateur de données étant connecté à un système de gestion comprenant le serveur d'administration et une entité de gestion (130) via un deuxième réseau (102) et servant de relais entre lesdits compteurs et le système de gestion, le système de communication comprend un équipement (160), associé audit dispositif (170A, 170B) et connecté à un concentrateur de données (110), dit concentrateur relai, via un troisième réseau (104), l'équipement (160) comprenant au moins :
- une première interface de communication (115A) avec un premier quatrième réseau (105A) de type à grande portée et à faible consommation d'énergie, dit réseau de type LPWAN, ledit réseau de type LPWAN permettant à au moins un dispositif (170A) connecté audit réseau de type LPWAN de communiquer avec l'équipement (160) en utilisant un protocole propriétaire utilisant une couche physique identique à une couche physique utilisée par le protocole LoRaWAN et des trames comprenant une charge utile de niveau applicatif ayant un format propriétaire, et/ou,
- au moins une deuxième interface de communication (115B) avec un deuxième quatrième réseau (105B) de type filaire dans lequel chaque données ou commande transmise est transmise dans une trame conforme au protocole Modbus,
le procédé comprenant :
transmettre (801, 802, 803, 804, 805) une commande audit dispositif (170A, 170B), par le serveur d'administration (150), via l'entité de gestion (130), le concentrateur relai (110) auquel est rattaché l'équipement (160) associé audit dispositif (170A, 170B) et l'équipement (160) associé audit dispositif (170A, 170B).

18. Programme d'ordinateur, **caractérisé en ce qu'**il comprend des instructions pour mettre en œuvre, par un dispositif, le procédé selon la revendication 14 ou au moins une étape du procédé selon la revendication 15, 16 ou 17 lorsque ledit programme est exécuté par un processeur dudit dispositif.

19. Moyens de stockage, **caractérisés en ce qu'**ils stockent un programme d'ordinateur comprenant des instructions pour mettre en œuvre, par un dispositif, le procédé selon la revendication 14 ou au moins une étape du procédé selon la revendication 15, 16 ou 17 lorsque ledit programme est exécuté par un processeur dudit dispositif.

## Patentansprüche

1. Vorrichtung, die dazu angepasst ist, mit einem System zur automatischen Verwaltung von Ablesewerten elektrischer Zähler, als AMM-System bezeichnet, verbunden zu sein, wobei das AMM-System mindestens einen Datenkonzentrator (110) beinhaltet, an den via ein erstes Powerline-Netzwerk (101) intelligente elektrische Zähler (120), als Zähler bezeichnet, angeschlossen sind, wobei jeder Datenkonzentrator via ein zweites Netzwerk (102) mit einem Verwaltungssystem, das eine Verwaltungseinheit (130) beinhaltet, verbunden ist und als Weiterleitungseinheit zwischen den Zählern und dem Verwaltungssystem dient, **dadurch gekennzeichnet, dass**:
die Vorrichtung via ein drittes Netzwerk (104) mit einem Datenkonzentrator, als Weiterleitungskonzentrator bezeichnet, verbunden ist,
die Vorrichtung mindestens eine Kommunikationsschnittstelle (115A, 115B) zu einem vierten Netzwerk (105A, 105B) beinhaltet, wobei das vierte Netzwerk mindestens einer mit dem vierten Netzwerk verbundenen Einrichtung gestattet, mit der Vorrichtung zu kommunizieren, wobei die Vorrichtung zu Folgendem fähig ist:
Empfangen von Daten von einer oder mehreren mit dem vierten Netzwerk verbundenen Einrichtungen, Überprüfen, ob die empfangenen Daten mit einem vorbestimmten Kriterium, das von einem Typ der übertragenen Daten abhängt, übereinstimmen und, im Fall einer Nichtübereinstimmung der Daten, Übertragen eines Alarms an einen Administrationsserver (150), der in dem Verwaltungssystem enthalten ist; und
dazu fähig ist, einen durch den Administrationsserver ausgegebenen Befehl, der für eine mit dem vierten Netzwerk verbundene Einrichtung bestimmt ist, weiterzuleiten.

2. Vorrichtung nach Anspruch 1, wobei die Vorrichtung eine erste Kommunikationsschnittstelle (115A) zu einem ersten vierten Netzwerk (105A) vom Typ Niedrigenergie-Weitverkehr-Netzwerk, als LPWAN-Netzwerk bezeichnet, und/oder eine zweite Kommunikationsschnittstelle (115B) zu einem zweiten vierten Netzwerk (105B) vom drahtgebundenen Typ beinhaltet.

3. Kommunikationssystem, das auf einem System zur automatischen Verwaltung von Ablesewerten elektrischer Zähler, als AMM-System bezeichnet, basiert, wobei das System mindestens eine Vorrichtung nach Anspruch 2 beinhaltet.

4. System nach Anspruch 3, wobei jede mit dem ersten oder dem zweiten vierten Netzwerk verbundene Einrichtung ein Sensor oder ein Aktor ist.

5. System nach Anspruch 4, wobei das zweite vierte Netzwerk ein Netzwerk vom Typ RS485 ist und jedes Datenelement oder jeder Befehl, das/der durch das zweite vierte Netzwerk übertragen wird, in einem Rahmen übertragen wird, der dem Modbus-Protokoll entspricht.

6. System nach Anspruch 4, wobei jedes Datenelement oder jeder Befehl, das/der über das LPWAN-Netzwerk übertragen wird, in einem Rahmen übertragen wird, der mit einem proprietären Protokoll übereinstimmt, welches eine physikalische Schicht, die mit einer durch das LoRaWAN-Protokoll verwendeten physikalischen Schicht identisch ist, und ein proprietäres Nutzlastformat auf Anwendungsebene verwendet.

7. System nach Anspruch 6, wobei das proprietäre Nutzlastformat Folgendes beinhaltet: ein erstes Feld (33110), das gestattet, einen beteiligten Einrichtungstyp entweder als Empfänger oder als Sender des Rahmens zu definieren, ein zweites Feld (33111), das gestattet, einen für einen Befehl repräsentativen Wert, wenn der Rahmen für eine Einrichtung vom Typ Aktor bestimmt ist, einen für einen Datentyp repräsentativen Wert, wenn der Rahmen mit einer Einrichtung vom Typ Sensor ausgetauscht wird, oder einen für eine Empfangsbestätigung repräsentativen Wert zu transportieren, ein drittes Feld (33112), das angibt, wie viele Datenbytes in der Nutzlast des Rahmens vorhanden sind, und optional, in Abhängigkeit von einem Wert des dritten Felds, ein oder mehrere vierte Datenfelder (33113).

8. System nach Anspruch 6 oder 7, das dazu angepasst ist, eine Verbindungsprozedur auszuführen, wenn eine Einrichtung mit dem LPWAN-Netzwerk verbunden werden soll, wobei die Verbindungsprozedur Folgendes beinhaltet:
- Ausgeben (701), durch die Einrichtung, im Multicast-Modus, einer Verbindungsanfrage, die mit dem proprietären Protokoll übereinstimmt;
- Weiterleiten (702), durch jede Vorrichtung des Systems, die die Anfrage empfangen hat, der Anfrage an den Weiterleitungskonzentrator, an den die Vorrichtung angeschlossen ist;
- Weiterleiten (703), durch jeden Weiterleitungskonzentrator, an den eine Vorrichtung, die die Anfrage weitergeleitet hat, angeschlossen ist, der Anfrage an die Verwaltungseinheit;
- Auswählen (704), durch die Verwaltungseinheit, aus den Vorrichtungen, die die Anfrage weitergeleitet haben, einer mit der Einrichtung zu assoziierenden Vorrichtung;
- Übertragen (705, 706, 707, 708), an die Einrichtung, durch die Verwaltungseinheit, via den Weiterleitungskonzentrator, an den die ausgewählte Vorrichtung angeschlossen ist, und die ausgewählte Vorrichtung, einer Anfrage nach einer Verbindungsgenehmigung.

9. System nach Anspruch 5, das dazu angepasst ist, eine Verbindungsprozedur auszuführen, wenn eine Einrichtung durch das zweite vierte Netzwerk mit einer Vorrichtung verbunden werden soll, wobei die Verbindungsprozedur Folgendes beinhaltet:
- Erzeugen, durch die Vorrichtung, einer virtuellen Einrichtung, die die Einrichtung, die mit dem zweiten vierten Netzwerk verbunden werden soll, repräsentiert;
- Erzeugen (701), durch die virtuelle Einrichtung, einer Verbindungsanfrage, die mit dem proprietären Protokoll übereinstimmt;
- Übertragen (702, 703, 704), durch die Vorrichtung, an die Verwaltungseinheit, via den an die Vorrichtung angeschlossenen Weiterleitungskonzentrator, der Verbindungsanfrage;
- Übertragen (705, 706, 707, 708), an die virtuelle Einrichtung, durch die Verwaltungseinheit, via den Weiterleitungskonzentrator, an den die Vorrichtung angeschlossen ist, und die Vorrichtung, einer Anfrage nach einer Verbindungsgenehmigung.

10. System nach Anspruch 8 oder 9, das dazu angepasst ist, eine Prozedur zur Übertragung eines Befehls an eine Einrichtung vom Typ Aktor auszuführen, wobei die Prozedur zur Übertragung eines Befehls das Übertragen (801, 802, 803, 804, 805) eines Befehls an die Einrichtung vom Typ Aktor durch den Administrationsserver via die Verwaltungseinheit, den Weiterleitungskonzentrator, an den die mit der Einrichtung vom Typ Aktor assoziierte Vorrichtung angeschlossen ist, und die mit der Einrichtung vom Typ Aktor assoziierte Vorrichtung beinhaltet.

11. System nach Anspruch 10, wobei die Prozedur zur Übertragung eines Befehls ferner Folgendes beinhaltet: Übertragen, durch die Einrichtung vom Typ Aktor, einer Empfangsbestätigung für den Befehl an den Administrationsserver, via die mit der Einrichtung vom Typ Aktor assoziierte Vorrichtung, den Weiterleitungskonzentrator, an den die mit der Einrichtung vom Typ Aktor assoziierte Vorrichtung angeschlossen ist, und die Verwaltungseinheit.

12. System nach Anspruch 8, das dazu angepasst ist, eine Prozedur zur Übertragung von Daten auszuführen, wobei die Prozedur zur Übertragung von Daten für jede Einrichtung vom Typ Sensor, die Daten überträgt, Folgendes beinhaltet: Übertragen (903), durch die Einrichtung vom Typ Sensor, von Daten in einem Rahmen, der mit dem proprietären Protokoll übereinstimmt, an die mit der Einrichtung vom Typ Sensor assoziierte Vorrichtung, wobei die Übertragung des Alarms an den Administrationsserver im Fall einer Nichtübereinstimmung von Daten, die durch eine Vorrichtung empfangen werden, via den Weiterleitungskonzentrator, an den die Vorrichtung, die die Nichtübereinstimmung festgestellt hat, angeschlossen ist, erfolgt.

13. System nach Anspruch 12, wobei die Übertragung, durch die Einrichtung vom Typ Sensor, der Daten in einem Rahmen, der dem proprietären Protokoll entspricht, an die mit der Einrichtung vom Typ Sensor assoziierte Vorrichtung im Anschluss an das Empfangen, durch die Einrichtung vom Typ Sensor, einer Anfrage (902), die mit dem proprietären Protokoll übereinstimmt, erfolgt, die durch die Vorrichtung, die eine Übertragung der Daten anfordert, ausgegeben (901) wurde.

14. Verfahren zur Meldung eines Alarms, das durch eine Vorrichtung (160) ausgeführt wird, die mit einem Kommunikationssystem verbunden ist, das auf einem System zur automatischen Verwaltung von Ablesewerten elektrischer Zähler, als AMM-System bezeichnet, basiert, wobei das AMM-System mindestens einen Datenkonzentrator (110) beinhaltet, an den via ein erstes Powerline-Netzwerk (101) intelligente elektrische Zähler (120), als Zähler bezeichnet, angeschlossen sind, wobei jeder Datenkonzentrator via ein zweites Netzwerk (102) mit einem Verwaltungssystem, das eine Verwaltungseinheit (130) beinhaltet, verbunden ist und als Weiterleitungseinheit zwischen den Zählern und dem Verwaltungssystem dient, wobei die Vorrichtung (160) via ein drittes Netzwerk (104) mit einem Datenkonzentrator (110), als Weiterleitungskonzentrator bezeichnet, verbunden ist und mindestens Folgendes beinhaltet:
- eine erste Kommunikationsschnittstelle (115A) zu einem ersten vierten Netzwerk (105A) vom Typ Niedrigenergie-Weitverkehr-Netzwerk, als LPWAN-Netzwerk bezeichnet, wobei das LPWAN-Netzwerk mindestens einer Einrichtung, die mit dem LPWAN-Netzwerk verbunden ist, gestattet, mit der Vorrichtung unter Verwendung eines proprietären Protokolls zu kommunizieren, welches eine physikalische Schicht, die mit einer durch das LoRaWAN-Protokoll verwendeten physikalischen Schicht identisch ist, und Rahmen, die eine Nutzlast auf Anwendungsebene mit einem proprietären Format beinhalten, verwendet, und/oder
- mindestens eine zweite Kommunikationsschnittstelle (115B) zu einem zweiten vierten Netzwerk (105B) vom drahtgebundenen Typ, wobei jedes übertragene Datenelement oder jeder übertragene Befehl in einem Rahmen übertragen wird, der dem Modbus-Protokoll entspricht;
wobei das Verfahren Folgendes beinhaltet:
- Empfangen (904) von Daten von einer oder mehreren Einrichtungen vom Typ Sensor (170A, 170B);
- Überprüfen (905), ob die empfangenen Daten mit einem vorbestimmten Kriterium, das von einem Typ der übertragenen Daten abhängt, übereinstimmen; und
- Übertragen (907) eines Alarms an einen in dem Verwaltungssystem enthaltenen Administrationsserver (150) im Fall einer Nichtübereinstimmung der Daten, wobei die Übertragung via den Weiterleitungskonzentrator (110) und die Verwaltungseinheit (130) erfolgt.

15. Kommunikationsverfahren zwischen einer Einrichtung (170A) und einem Administrationsserver (150), die in einem Kommunikationssystem enthalten sind, das auf einem System zur automatischen Verwaltung von Ablesewerten elektrischer Zähler, als AMM-System bezeichnet, basiert, wobei das AMM-System mindestens einen Datenkonzentrator (110) beinhaltet, an den via ein erstes Powerline-Netzwerk (101) intelligente elektrische Zähler (120), als Zähler bezeichnet, angeschlossen sind, wobei jeder Datenkonzentrator via ein zweites Netzwerk (102) mit einem Verwaltungssystem, das den Administrationsserver (150) und eine Verwaltungseinheit (130) beinhaltet, verbunden ist und als Weiterleitungseinheit zwischen den Zählern und dem Verwaltungssystem dient, wobei das Kommunikationssystem mindestens eine Vorrichtung (160) beinhaltet, die via ein drittes Netzwerk (104) mit einem Datenkonzentrator (110), als Weiterleitungskonzentrator bezeichnet, verbunden ist, wobei die Vorrichtung (160) mindestens eine Kommunikationsschnittstelle (115A) zu einem vierten Netzwerk (105A) vom Typ Niedrigenergie-Weitverkehr-Netzwerk, als LPWAN-Netzwerk bezeichnet, beinhaltet, wobei das LPWAN-Netzwerk mindestens einer Einrichtung (170A, 170B), die mit dem LPWAN-Netzwerk verbunden ist, gestattet, mit der Vorrichtung (160) unter Verwendung eines proprietären Protokolls zu kommunizieren, welches eine physikalische Schicht, die mit einer durch das LoRaWAN-Protokoll verwendeten physikalischen Schicht identisch ist, und Rahmen, die eine Nutzlast auf Anwendungsebene mit einem proprietären Format beinhalten, verwendet,
wobei das Verfahren eine Prozedur zur Verbindung der Einrichtung (170A) mit dem vierten Netzwerk (105A) beinhaltet, wobei die Prozedur Folgendes beinhaltet:
- Ausgeben (701), durch die Einrichtung (170A), im Multicast-Modus, einer Verbindungsanfrage, die mit dem proprietären Protokoll übereinstimmt;
- Weiterleiten (702), durch jede Vorrichtung des Systems, die die Anfrage empfängt, der Anfrage an den Weiterleitungskonzentrator, an den die Vorrichtung angeschlossen ist;
- Weiterleiten (703), durch jeden Weiterleitungskonzentrator, an den eine Vorrichtung, die die Anfrage weitergeleitet hat, angeschlossen ist, der Anfrage an die Verwaltungseinheit (130);
- Auswählen (704), durch die Verwaltungseinheit (130), aus den Vorrichtungen, die die Anfrage weitergeleitet haben, einer mit der Einrichtung (170A) zu assoziierenden Vorrichtung;
- Übertragen (705, 706, 707, 708), an die Einrichtung (170A), durch die Verwaltungseinheit (130), via den Weiterleitungskonzentrator (110), an den die ausgewählte Vorrichtung angeschlossen ist, und die ausgewählte Vorrichtung, einer Anfrage nach einer Verbindungsgenehmigung,
- um so der Vorrichtung zu gestatten, Informationen zwischen der Einrichtung (170A) und dem Administrationsserver (150) weiterzuleiten.

16. Kommunikationsverfahren zwischen einer Einrichtung (170B) und einem Administrationsserver (150), die in einem Kommunikationssystem enthalten sind, das auf einem System zur automatischen Verwaltung von Ablesewerten elektrischer Zähler, als AMM-System bezeichnet, basiert, wobei das AMM-System mindestens einen Datenkonzentrator (110) beinhaltet, an den via ein erstes Powerline-Netzwerk (101) intelligente elektrische Zähler (120), als Zähler bezeichnet, angeschlossen sind, wobei jeder Datenkonzentrator via ein zweites Netzwerk (102) mit einem Verwaltungssystem, das den Administrationsserver (150) und eine Verwaltungseinheit (130) beinhaltet, verbunden ist und als Weiterleitungseinheit zwischen den Zählern und dem Verwaltungssystem dient, wobei das Kommunikationssystem mindestens eine Vorrichtung (160) beinhaltet, die via ein drittes Netzwerk (104) mit einem Datenkonzentrator (110), als Weiterleitungskonzentrator bezeichnet, verbunden ist, wobei die Vorrichtung (160) mindestens eine Kommunikationsschnittstelle (115B) zu einem vierten Netzwerk (105B) vom drahtgebundenen Typ beinhaltet, wobei jedes übertragene Datenelement oder jeder übertragene Befehl in einem Rahmen übertragen wird, der dem Modbus-Protokoll entspricht,
wobei das Verfahren eine Prozedur zur Verbindung der Einrichtung (170B) mit dem vierten Netzwerk (105B) beinhaltet, wobei die Prozedur Folgendes beinhaltet:
- Erzeugen, durch die Vorrichtung, einer virtuellen Einrichtung, die die Einrichtung, die mit dem vierten Netzwerk verbunden werden soll, repräsentiert;
- Erzeugen (701), durch die virtuelle Einrichtung, einer Verbindungsanfrage, die mit dem proprietären Protokoll übereinstimmt;
- Übertragen (702, 703, 704), durch die Vorrichtung, an die Verwaltungseinheit, via den an die Vorrichtung angeschlossenen Weiterleitungskonzentrator, der Verbindungsanfrage;
- Übertragen (705, 706, 707, 708), an die virtuelle Einrichtung, durch die Verwaltungseinheit, via den Weiterleitungskonzentrator, an den die Vorrichtung angeschlossen ist, und die Vorrichtung, einer Anfrage nach einer Verbindungsgenehmigung,
- um so der Vorrichtung zu gestatten, Informationen zwischen der Einrichtung (170B) und dem Administrationsserver (150) weiterzuleiten.

17. Verfahren zur Übertragung eines Befehls zwischen einem Administrationsserver (150) und einer Einrichtung (170A, 170B), die in einem Kommunikationssystem enthalten sind, das auf einem System zur automatischen Verwaltung von Ablesewerten elektrischer Zähler, als AMM-System bezeichnet, basiert, wobei das AMM-System mindestens einen Datenkonzentrator (110) beinhaltet, an den via ein erstes Powerline-Netzwerk (101) intelligente elektrische Zähler (120), als Zähler bezeichnet, angeschlossen sind, wobei jeder Datenkonzentrator via ein zweites Netzwerk (102) mit einem Verwaltungssystem, das den Administrationsserver und eine Verwaltungseinheit (130) beinhaltet, verbunden ist und als Weiterleitungseinheit zwischen den Zählern und dem Verwaltungssystem dient, wobei das Kommunikationssystem eine Vorrichtung (160) beinhaltet, die mit der Einrichtung (170A, 170B) assoziiert ist und via ein drittes Netzwerk (104) mit einem Datenkonzentrator (110), als Weiterleitungskonzentrator bezeichnet, verbunden ist, wobei die Vorrichtung (160) mindestens Folgendes beinhaltet:
- eine erste Kommunikationsschnittstelle (115A) zu einem ersten vierten Netzwerk (105A) vom Typ Niedrigenergie-Weitverkehr-Netzwerk, als LPWAN-Netzwerk bezeichnet, wobei das LPWAN-Netzwerk mindestens einer Einrichtung (170A), die mit dem LPWAN-Netzwerk verbunden ist, gestattet, mit der Vorrichtung (160) unter Verwendung eines proprietären Protokolls zu kommunizieren, welches eine physikalische Schicht, die mit einer durch das LoRaWAN-Protokoll verwendeten physikalischen Schicht identisch ist, und Rahmen, die eine Nutzlast auf Anwendungsebene mit einem proprietären Format beinhalten, verwendet, und/oder
- mindestens eine zweite Kommunikationsschnittstelle (115B) zu einem zweiten vierten Netzwerk (105B) vom drahtgebundenen Typ, wobei jedes übertragene Datenelement oder jeder übertragene Befehl in einem Rahmen übertragen wird, der dem Modbus-Protokoll entspricht,
wobei das Verfahren Folgendes beinhaltet:
Übertragen (801, 802, 803, 804, 805) eines Befehls an die Einrichtung (170A, 170B), durch den Administrationsserver (150), via die Verwaltungseinheit (130), den Weiterleitungskonzentrator (110), an den die mit der Einrichtung (170A, 170B) assoziierte Vorrichtung (160) angeschlossen ist, und die mit der Einrichtung (170A, 170B) assoziierte Vorrichtung (160).

18. Computerprogramm, **dadurch gekennzeichnet, dass** es Anweisungen zur Umsetzung des Verfahrens nach Anspruch 14 oder mindestens eines Schritts des Verfahrens nach Anspruch 15, 16 oder 17 durch eine Einrichtung beinhaltet, wenn das Programm durch einen Prozessor der Einrichtung ausgeführt wird.

19. Speichermittel, **dadurch gekennzeichnet, dass** sie ein Computerprogramm speichern, das Anweisungen zur Umsetzung des Verfahrens nach Anspruch 14 oder mindestens eines Schritts des Verfahrens nach Anspruch 15, 16 oder 17 durch eine Einrichtung beinhaltet, wenn das Programm durch einen Prozessor der Einrichtung ausgeführt wird.

## Claims

1. Equipment adapted for being connected to a system for the automatic management of electricity meter readings, referred to as an AMM system, the AMM system comprising at least one data concentrator (110) to which smart electricity meters (120), referred to as meters, are attached, via a first powerline network (101), each data concentrator being connected to a management system comprising a management entity (130) via a second network (102) and serving as a relay between said meters and the management system, **characterised in that**:
the equipment is connected to a data concentrator, referred to as a relay concentrator, via a third network (104),
said equipment comprises at least one interface (115A, 115B) for communication with a fourth network (105A, 105B), said fourth network enabling at least one device connected to said fourth network to communicate with the equipment, said equipment being able:
to receive data from one or more devices connected to the fourth network, to check that the data received are in accordance with a predetermined criterion dependent on a type of data transmitted and to transmit an alarm to an administration server (150) included in the management system in the event of non-conformity of said data; and
able to relay a command sent by the administration server and intended for a device connected to the fourth network.

2. Equipment according to claim 1, the equipment comprising a first interface (115A) for communication with a first fourth long-range network (105A) with low energy consumption, referred to as an LPWAN network, and/or a second interface (115B) for communication with a second fourth cabled network (105B).

3. Communication system based on a system for the automatic management of electricity meter readings, referred to as an AMM system, the system comprising at least one item of equipment according to claim 2.

4. System according to claim 3, wherein each device connected to the first or to the second fourth network is a sensor or an actuator.

5. System according to claim 4, wherein the second fourth network is a network of the RS485 type and each data item or command transmitted by the second fourth network is transmitted in a frame in accordance with the Modbus protocol.

6. System according to claim 4, wherein each data item or command transmitted over the LPWAN network is transmitted in a frame in accordance with a proprietary protocol using a physical layer identical to a physical layer used by the LoRaWAN protocol and a proprietary application-level payload format.

7. System according to claim 6, wherein the proprietary payload format comprises a first field (33110) for defining a type of device involved either as a destination or as a sender of the frame, a second field (33111) for transporting a value representing a command when the frame is intended for a device of the actuator type, a value representing a data type when the frame is exchanged with a device of the sensor type or a value representing an acknowledgement of receipt, a third field (33112) indicating how many data bytes are present in the payload of the frame and optionally, according to a value of the third field, one or more fourth data fields (33113).

8. System according to claim 6 or 7, adapted for executing a connection procedure when a device is to be connected to said LPWAN network, the connection procedure comprising:
- sending (701), by said device, a connection request in accordance with the proprietary protocol in broadcast mode;
- relaying (702), by each item of equipment in said system that received said request, said request to the relay concentrator to which the equipment is attached;
- relaying (703), by each relay concentrator to which an item of equipment that relayed the request is attached, said request to the management entity;
- choosing (704), by the management entity, among the items of equipment that relayed said request, an item of equipment to be associated with said device;
- transmitting (705, 706, 707, 708) to said device, by the management entity, via the relay concentrator to which the chosen item of equipment is attached and the chosen item of equipment, a connection-enabling request.

9. System according to claim 5, adapted for executing a connection procedure when a device is to be connected to an item of equipment by said second fourth network, the connection procedure comprising:
- creating, by said item of equipment, a virtual device representing the device that is to be connected to the second fourth network;
- creating (701), by said virtual device, a connection request in accordance with the proprietary protocol;
- transmitting (702, 703, 704), by the item of equipment, to the management entity, via the relay concentrator attached to the item of equipment, the connection request;
- transmitting (705, 706, 707, 708), to said virtual device, by the management entity, via the relay concentrator to which the item of equipment is attached and the item of equipment, a connection-enabling request.

10. System according to claim 8 or 9, adapted for executing a procedure for transmitting a command to a device of the actuator type, the procedure for transmitting a command comprising transmitting (801, 802, 803, 804, 805) a command to said device of the actuator type, by the administration server, via the management entity, the relay concentrator to which the item of equipment associated with said device of the actuator type is attached and the item of equipment associated with said device of the actuator type.

11. System according to claim 10, wherein the procedure for transmitting a command further comprises: transmitting, by said device of the actuator type, an acknowledgement of receipt for the command to the administration server, via the item of equipment associated with said device of the actuator type, the relay concentrator to which the item of equipment associated with said device of the actuator type is attached and the management entity.

12. System according to claim 8, adapted for executing a data transmission procedure, the data transmission procedure comprising, for each device of the sensor type transmitting data: transmitting (903), by said device of the sensor type, data in a frame in accordance with the proprietary protocol to the item of equipment associated with said device of the sensor type, the transmission of the alarm to the administration server in the event of non-conformity of data received by an item of equipment taking place via the relay concentrator to which the item of equipment that noted said non-conformity is attached.

13. System according to claim 12, wherein the transmission by said device of the sensor type of the data in a frame in accordance with the proprietary protocol to the item of equipment associated with said device of the sensor type follows a reception by said device of the sensor type of a request (902) in accordance with the proprietary protocol sent (901) by the item of equipment requesting a transmission of said data.

14. Method for transferring an alarm executed by an item of equipment (160) connected to a communication system based on a system for the automatic management of electricity meter readings, referred to as an AMM system, the AMM system comprising at least one data concentrator (110) to which smart electricity meters (120), referred to as meters, are attached, via a first powerline network (101), each data concentrator being connected to a management system comprising a management entity (130) via a second network (102) and serving as a relay between said meters and the management system,
said item of equipment (160) being connected to a data concentrator (110), referred to as a relay concentrator, via a third network (104) and comprising at least:
- one first interface (115A) for communication with a first fourth network (105A) of the long range and low energy consumption type, referred to as an LPWAN network, said LPWAN network enabling at least one device connected to said LPWAN network to communicate with the item of equipment using a proprietary protocol using a physical layer identical to a physical layer used by the LoRaWAN protocol and frames comprising an application-level payload having a proprietary format,
and/or
- at least one second interface (115B) for communication with a second fourth network (105B) of the cabled type in which each data or command transmitted is transmitted in a frame in accordance with the Modbus protocol;
the method comprising:
- receiving (904) data from one or more devices of the sensor type (107A, 107B);
- checking (905) that the data received are in accordance with a predetermined criterion dependent on a type of data transmitted; and
- transmitting (907) an alarm to an administration server (150) included in the management system in the case of non-conformity of said data, the transmission taking place via the relay concentrator and the management entity.

15. Method for communication between a device (170A) and an administration server (150) included in a communication system based on a system for automatic management of electricity meter readings, referred to as an AMM system, the AMM system comprising at least one data concentrator (110) to which smart electricity meters (120), referred to as meters, are attached, via a first powerline network (101), each data concentrator being connected to a management system comprising the administration server (150) and a management entity (130) via a second network (102) and serving as a relay between said meters and the management system, the communication system comprising at least one item of equipment (160) connected to a data concentrator (110), referred to as a relay concentrator, via a third network (104), the item of equipment (160) comprising at least one interface (115A) for communication with a fourth network (105A) of the long-range type with low energy consumption, referred to as an LPWAN network, said LPWAN network enabling at least one device (170A, 170B) connected to said LPWAN network to communicate with the item of equipment (160) using a proprietary protocol using a physical layer identical to a physical layer used by the LoRaWAN protocol and frames comprising an application-level payload having a proprietary format,
the method comprising a procedure for connection of said device (107A) to said fourth network (105A), said procedure comprising:
- sending (701), by said device (170A), a connection request in accordance with the proprietary protocol in broadcast mode;
- relaying (702), by each item of equipment of said system receiving said request, said request to the relay concentrator to which the item of equipment is attached;
- relaying (703), by each relay concentrator to which an item of equipment that relayed the request is attached, said request to the management entity (130);
- choosing (704), by the management entity (130), among the items of equipment that relayed said request, an item of equipment to be associated with said device (170A);
- transmitting (705, 706, 707, 708) to said device (170A), by the management entity (130), via the relay concentrator (110) to which the chosen item of equipment is attached and the chosen item of equipment, a connection-enabling request;
- so as to enable said item of equipment to relay information between said device (170A) and said administration server (150).

16. Method for communication between a device (170B) and an administration server (150) included in a communication system based on a system for automatic management of electricity meter readings, referred to as an AMM system, the AMM system comprising at least one data concentrator (110) to which smart electricity meters (120), referred to as meters, are attached, via a first powerline network (101), each data concentrator being connected to a management system comprising the administration server (150) and a management entity (130) via a second network (102) and serving as a relay between said meters and the management system, the communication system comprises at least one item of equipment (160) connected to a data concentrator (110), referred to as a relay concentrator, via a third network (104), the item of equipment (160) comprising at least one interface (115B) for communication with a fourth network (105B) of the cabled type wherein each data or command transmitted is transmitted in a frame in accordance with the Modbus protocol,
the method comprising a procedure for connection of said device (170B) to said fourth network (105B), said procedure comprising:
- creating, by said item of equipment, a virtual device representing the device that is to be connected to the fourth network;
- creating (701), by said virtual device, a connection request in accordance with the proprietary protocol;
- transmitting (702, 703, 704), by the item of equipment, to the management entity, via the relay concentrator attached to the item of equipment, the connection request;
- transmitting (705, 706, 707, 708), to said virtual device, by the management entity, via the relay concentrator to which the equipment is attached and the item of equipment, a connection-enable request,
- so as to enable said item of equipment to relay information between said device (170B) and said administration server (150).

17. Method for transmitting a command between an administration server (150) and a device (170A, 170B) included in a communication system based on a system for automatic management of electricity meter readings, referred to as an AMM system, the AMM system comprising at least one data concentrator (110) to which smart electricity meters (120), referred to as meters, are attached, via a first powerline network (101), each data concentrator being connected to a management system comprising the administration server and a management entity (130) via a second network (102) and serving as a relay between said meters and the management system, the communication system comprises an item of equipment (160), associated with said device (170A, 170B) and connected to a data concentrator (110), referred to as a relay concentrator, via a third network (104), the item of equipment (160) comprising at least:
- one first interface (115A) for communication with a first fourth network (105A) of the long-range type and with low energy consumption, referred to as an LPWAN network, said LPWAN network enabling at least one device (170A) connected to said LPWAN network to communicate with the item of equipment (160) using a proprietary protocol using a physical layer identical to a physical layer used by the LoRaWAN protocol and frames comprising an application-level payload having a proprietary format, and/or
- at least one second interface (115B) for communication with a second fourth network (105B) of the cabled type wherein each data item or command transmitted is transmitted in a frame in accordance with the Modbus protocol,
the method comprising
transmitting (801, 802, 803, 804, 805) a command to said device (170A, 170B), by the administration server (150), via the management entity (130), the relay concentrator (110) to which the item of equipment (160) associated with said device (170A, 170B) is attached and the item of equipment (160) associated with said device (170A, 170B).

18. Computer program, **characterised in that** it comprises instructions for implementing, by a device, the method according to claim 14 or at least one step of the method according to claim 15, 16 or 17 when said program is executed by a processor of said device.

19. Storage means, **characterised in that** they store a computer program comprising instructions for implementing, by a device, the method according to claim 14 or at least one step of the method according to claim 15, 16 or 17 when said program is executed by a processor of said device.
